# EUROPEAN PATENT APPLICATION

(11) **EP 2 903 380 A1**
(43) Date of publication of application: **05.08.2015**
(21) Application number: 12886776.9
(22) Date of filing: 16.10.2012
(51) Int. Cl.: H04W 72/12

(54) **TRANSMISSION SCHEDULING REQUEST METHOD AND APPARATUS, USER EQUIPMENT AND BASE STATION**

(71) Applicant: Huawei Technologies Co., Ltd., Longgang District Shenzhen, Guangdong 518129 (CN)
(72) Inventor: CHENG, Yan, Shenzhen Guangdong 518129 (CN); MA, Sha, Shenzhen Guangdong 518129 (CN); XUE, Lixia, Shenzhen Guangdong 518129 (CN)
(74) Representative: Epping - Hermann - Fischer
(86) International application number: PCT/CN2012/083040
(87) International publication number: WO 2014/059606

(57) **Abstract**

The embodiment of the present invention relates to a method and an apparatus for transmitting a scheduling request, wherein the method for transmitting the scheduling request comprises: determining, by a user equipment, physical uplink control channel resources for transmitting scheduling request information based on a received scheduling request configuration, wherein the scheduling request information is used for requesting a base station for uplink resources by the user equipment; and transmitting, by the user equipment, the scheduling request information on the determined physical uplink control channel resources. The embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

## Description

### TECHNICAL FIELD

The present invention relates to communication technologies, in particular to a method and an apparatus for transmitting a scheduling request, a user equipment and a base station.

### BACKGROUND

A long term evolution-advanced (LTE-A, Long Term Evolution-Advanced) system is a further evolved and enhanced system of a 3rd generation partnership project (3GPP, 3rd Generation Partnership Project) long term evolution (LTE, Long Term Evolution) system. In order to meet requirement of the International Telecommunications Union for peak data rate of the 4th generation communication technology, a carrier aggregation (CA, Carrier Aggregation) technology, also referred to as a spectrum aggregation (Spectrum Aggregation) technology or a bandwidth extension (Bandwidth Extension) technology, is introduced to the LTE-A system. In a carrier aggregation, spectrums of two or more component carriers (Component Carrier) are aggregated together to obtain a wider transmission bandwidth, wherein the spectrums of respective component carriers may be contiguous spectrum, or noncontiguous spectrum in a same frequency band, or even noncontiguous spectrum in different frequency bands. LTE-A user equipment (UE, User Equipment) may simultaneously access a plurality of component carriers to perform data transceiving according to capability and service requirement thereof.

In an existing carrier aggregation system, carriers of a same base station ( eNB, Evolved NodeB) are aggregated or carriers of a macro (Macro) cell and a pico (Pico) cell with ideal backhaul (Backhaul) are aggregated, for example, the macro cell is connected to the pico cell through an optical fiber (in which case the pico cell may be a radio frequency head). In this way, combined scheduling technology may be adopted among a plurality of carriers, namely, when an eNB schedules one of aggregated carriers, the eNB is also aware of scheduling status of another carrier.

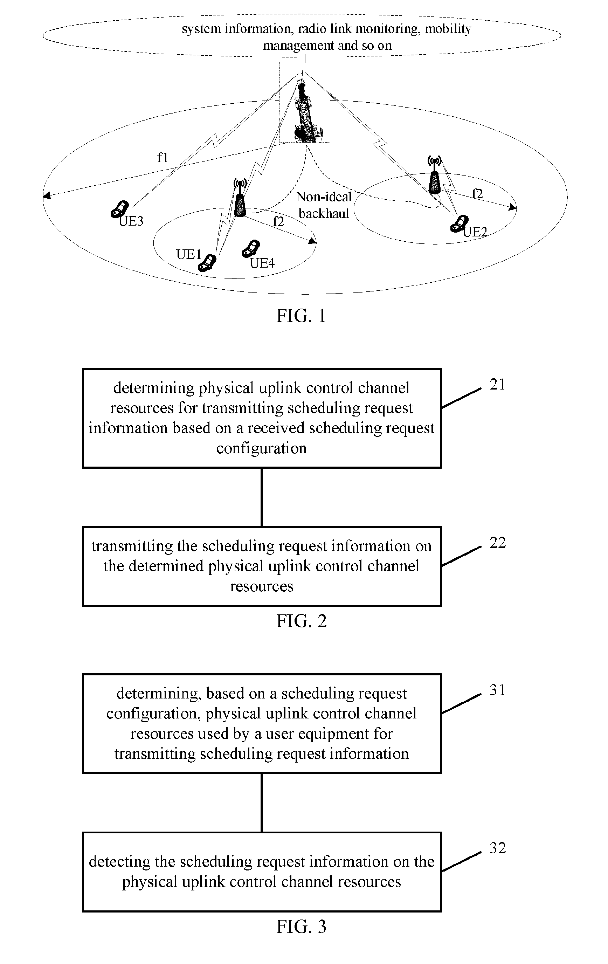

In a further evolved LTE system, carrier aggregation among base stations will be introduced, and in this case non-ideal backhaul is present among the base stations, so data cannot be transmitted among the base stations in real time. As shown in Fig. 1, under a macro-pico coupling scenario, a macro cell deployed at frequency f1 is primarily responsible for providing system information and implementing radio link monitoring and mobility management, so as to ensure continuity of a service; and meanwhile, in order to ensure continuity of a voice service, a semi-persistent scheduling service is usually served by the macro cell. A plurality of pico cells deployed at frequency f2, which are within a coverage area of the macro cell, are primarily responsible for providing transmission of a high data rate service. Non-ideal backhaul is present between the macro cell and the pico cells and among the pico cells.

Scheduling request (SR, Scheduling Request) information is used by UE for requesting an eNB for resources for sending uplink data. In an existing CA system, the SR information is sent only on an uplink primary carrier. In a system of the above-mentioned CA among base stations, if an existing mechanism is still employed for transmitting the SR information, the macro cell needs to notify a Pico to perform uplink data scheduling for UE via an X2 interface when the macro cell receives the SR information and learns that the UE needs to transmit uplink data. Since data cannot be transferred among the base stations in real time, time for uplink data to be served is delayed, thereby reducing user experience.

### SUMMARY

The present invention provides a method and an apparatus for transmitting a scheduling request, a user equipment and a base station, aiming at solving a problem of how to transmit a scheduling request under a scenario of multi-stream aggregation (MSA, Multi-Stream Aggregation).

In a first aspect, a method for transmitting a scheduling request is provided, including: determining, by a user equipment, physical uplink control channel resources for transmitting scheduling request information based on a received scheduling request configuration, wherein the scheduling request information is used for requesting a base station for uplink resources by the user equipment; and transmitting, by the user equipment, the scheduling request information on the determined physical uplink control channel resources.

In combination with the first aspect, in a first implementation of the first aspect, the determining, by a user equipment, physical uplink control channel resources for transmitting scheduling request information based on a received scheduling request configuration, includes: determining, by the user equipment, when the scheduling request configuration includes a plurality of parameters indicating physical uplink control channels, a physical uplink control channel for transmitting the scheduling request information according to the parameter, wherein the plurality of parameters indicating the physical uplink control channels respectively indicate scheduling request information corresponding to different base stations; and the transmitting, by the user equipment, the scheduling request information on the determined physical uplink control channel resources, includes: transmitting, by the user equipment, scheduling request information for requesting uplink resources from a corresponding base station on the determined physical uplink control channel.

In combination with the first aspect and the above-mentioned implementation, in a second implementation of the first aspect, the plurality of parameters indicating the physical uplink control channels comprise a parameter of a first physical uplink control channel and a parameter of a second physical uplink control channel, the parameter of the first physical uplink control channel being used for indicating a physical uplink control channel for transmitting scheduling request information for requesting uplink resources from a first base station, and the parameter of the second physical uplink control channel being used for indicating a physical uplink control channel for transmitting scheduling request information for requesting uplink resources from a second base station; and the transmitting, by the user equipment, the scheduling request information on the determined physical uplink control channel resources, includes: transmitting, by the user equipment, the scheduling request information for requesting uplink resources from the first base station on the physical uplink control channel indicated by the parameter of the first physical uplink control channel, and transmitting the scheduling request information for requesting uplink resources from the second base station on the physical uplink control channel indicated by the parameter of the second physical uplink control channel.

In combination with the first aspect and the above-mentioned implementations, in a third implementation of the first aspect, the determining, by a user equipment, physical uplink control channel resources for transmitting scheduling request information based on a received scheduling request configuration, includes: determining, by the user equipment, when the scheduling request configuration includes a parameter indicating a transmission period and a subframe offset of scheduling request information, subframes for transmitting scheduling request information for requesting uplink resources from different base stations according to the parameter indicating the transmission period and the subframe offset of the scheduling request information; and the transmitting, by the user equipment, the scheduling request information on the determined physical uplink control channel resources, includes: transmitting, by the user equipment, scheduling request information for requesting uplink resources from a corresponding base station at a determined subframe.

In combination with the first aspect and the above-mentioned implementations, in a fourth implementation of the first aspect, the transmitting, by the user equipment, scheduling request information for requesting uplink resources from a corresponding base station at a determined subframe, includes: transmitting, by the user equipment, scheduling request information for requesting uplink resources from a first base station at a subframe at an even position of the determined subframes, and transmitting, by the user equipment, scheduling request information for requesting uplink resources from a second base station at a subframe at an odd position of the determined subframes.

In combination with the first aspect and the above-mentioned implementations, in a fifth implementation of the first aspect, the determining, by a user equipment, physical uplink control channel resources for transmitting scheduling request information based on a received scheduling request configuration, includes: determining, by the user equipment, when the scheduling request configuration includes a plurality of scheduling request sub-configurations each including a parameter indicating a transmission period and a subframe offset of scheduling request information for requesting uplink resources from a corresponding base station, a subframe for transmitting scheduling request information for requesting uplink resources from a corresponding base station according to a parameter indicating a transmission period and a subframe offset of the scheduling request information for requesting uplink resources from the corresponding base station; and the transmitting, by the user equipment, the scheduling request information on the determined physical uplink control channel resources, includes: transmitting, by the user equipment, the scheduling request information for requesting uplink resources from the corresponding base station at the determined subframe.

In combination with the first aspect and the above-mentioned implementations, in a sixth implementation of the first aspect, the determining, by a user equipment, physical uplink control channel resources for transmitting scheduling request information based on a received scheduling request configuration, further includes: determining, by the user equipment, when each of the scheduling request sub-configurations further includes a parameter indicating a physical uplink control channel, a physical uplink control channel for transmitting the scheduling request information according to a parameter indicating the physical uplink control channel; and the transmitting, by the user equipment, the scheduling request information on the determined physical uplink control channel resources, includes: transmitting, by the user equipment, the scheduling request information for requesting uplink resources from the corresponding base station at the determined subframe and on the determined physical uplink control channel.

In combination with the first aspect and the above-mentioned implementations, in a seventh implementation of the first aspect, before the transmitting, by the user equipment, the scheduling request information on the determined physical uplink control channel resources, the method further includes: determining, by the user equipment, scheduling request information to be transmitted; and setting, by the user equipment, an information bit for the scheduling request information to be transmitted, wherein the information bit is used for indicating that the scheduling request information is used for requesting uplink resources from a corresponding base station.

In combination with the first aspect and the above-mentioned implementations, in an eighth implementation of the first aspect, if the scheduling request information to be transmitted is used for requesting uplink resources from a first base station, the information bit corresponding to the scheduling request information to be transmitted is set to 0; and if the scheduling request information to be transmitted is used for requesting uplink resources from a second base station, the information bit corresponding to the scheduling request information to be transmitted is set to 1; or if the scheduling request information to be transmitted is used for requesting uplink resources from a first base station, the information bit corresponding to the scheduling request information to be transmitted is set to 10; if the scheduling to-be-transmitted request information is used for requesting uplink resources from a second base station, the information bit corresponding to the scheduling request information to be transmitted is set to 01; and if the scheduling request information to be transmitted is used for simultaneously requesting uplink resources from the first base station and the second base station, the information bit corresponding to the scheduling request information to be transmitted is set to 11.

In combination with the first aspect and the above-mentioned implementations, in a ninth implementation of the first aspect, the determining, by the user equipment, scheduling request information to be transmitted, further includes: determining, by the user equipment, that the scheduling request information is a piece of scheduling request information with a highest priority according to a preset priority if the scheduling request information to be transmitted includes a plurality of pieces of scheduling request information for requesting uplink resources from different base stations.

In combination with the first aspect and the above-mentioned implementations, in a tenth implementation of the first aspect, the preset priority is a priority of a carrier, a priority signaled semi-statically by a higher layer, or a priority of a base station.

In combination with the first aspect and the above-mentioned implementations, in an eleventh implementation of the first aspect, the physical uplink control channel resources are physical uplink control channel resources on an uplink carrier corresponding to a macro base station.

In a second aspect, another method for transmitting a scheduling request is provided, including: determining, by a base station, based on a scheduling request configuration, physical uplink control channel resources for transmitting scheduling request information by a user equipment; and detecting, by the base station, the scheduling request information on the physical uplink control channel resources.

In combination with the second aspect, in a first implementation of the second aspect, if the scheduling request configuration includes a plurality of parameters indicating physical uplink control channels, each of which is used for indicating a physical uplink control channel used by the user equipment for transmitting scheduling request information for requesting uplink resources from a corresponding base station; the determining, by a base station, based on a scheduling request configuration, physical uplink control channel resources for transmitting scheduling request information by a user equipment, includes: determining, by the base station, based on the parameters indicating physical uplink control channels, physical uplink control channels used by the user equipment for transmitting scheduling request information for requesting uplink resources from different base stations; and the detecting, by the base station, the scheduling request information on the physical uplink control channel resources, includes: detecting, by the base station, the scheduling request information on the physical uplink control channels.

In combination with the second aspect and the above-mentioned implementation, in a second implementation of the second aspect, if the scheduling request configuration includes a parameter indicating a transmission period and a subframe offset of scheduling request information, the determining, by a base station, based on a scheduling request configuration, physical uplink control channel resources for transmitting scheduling request information by a user equipment, includes: determining, by the base station, based on the parameter indicating the transmission period and the subframe offset of the scheduling request information, subframes for transmitting scheduling request information by the user equipment; and the detecting, by the base station, the scheduling request information on the determined physical uplink control channels, includes: detecting, by the base station, the scheduling request information on the subframes.

In combination with the second aspect and the above-mentioned implementations, in a third implementation of the second aspect, the determining, by the base station, based on the parameter indicating the transmission period and the subframe offset of the scheduling request information, subframes for transmitting scheduling request information by the user equipment, includes: receiving, by the base station, the scheduling request information at a subframe at an odd or an even position of the determined subframes.

In combination with the second aspect and the above-mentioned implementations, in a fourth implementation of the second aspect, if the scheduling request configuration includes a plurality of scheduling request sub-configurations, each of which is used for configuring scheduling request information for the user equipment to request uplink resources from a corresponding base station; the determining, by a base station, based on a scheduling request configuration, physical uplink control channel resources for transmitting scheduling request information, includes: determining by a user equipment, by the base station, based on the plurality of scheduling request sub-configurations, physical uplink control channel resources used by the user equipment for transmitting scheduling request information for requesting uplink resources from the base station; and the detecting, by the base station, the scheduling request information on the physical uplink control channel resources, includes: detecting, by the base station, the scheduling request information on the physical uplink control channel resources indicated by the scheduling request sub-configurations.

In combination with the second aspect and the above-mentioned implementations, in a fifth implementation of the second aspect, the detecting, by the base station, the scheduling request information on the physical uplink control channel resources, further includes: parsing, by the base station, an information bit of the scheduling request information, wherein the information bit is used for indicating that the scheduling request information is used for requesting uplink resources from a corresponding base station; and determining, by the base station, according to the information bit, whether or not the scheduling request information is intended to be transmitted to the base station by the user equipment.

In combination with the second aspect and the above-mentioned implementations, in a sixth implementation of the second aspect, if a parsed value of the information bit is 0, the scheduling request information is used for requesting uplink resources from a first base station; and if a parsed value of the information bit of the scheduling request information is 1, the scheduling request information is used for requesting uplink resources from a second base station; or if a parsed value of the information bit is 10, the scheduling request information is used for requesting uplink resources from a first base station; if a parsed value of the information bit is 01, the scheduling request information is used for requesting uplink resources from a second base station; and if a parsed value of the information bit is 11, the scheduling request information is used for simultaneously requesting uplink resources from the first base station and the second base station.

In combination with the second aspect and the above-mentioned implementations, in a seventh implementation of the second aspect, if the base station is a macro base station, before the determining, by the base station, based on a scheduling request configuration, physical uplink control channel resources for transmitting scheduling request information by a user equipment, the method further includes: sending, by the base station, the scheduling request configuration to the user equipment or to a pico base station through high-level signaling.

In combination with the second aspect and the above-mentioned implementations, in an eighth implementation of the second aspect, if the base station is a pico base station, before the determining, by the base station, based on a scheduling request configuration, physical uplink control channel resources for transmitting scheduling request information by a user equipment, the method further includes: receiving, by the base station, the scheduling request configuration sent by a macro base station.

In a third aspect, an apparatus for transmitting a scheduling request is provided, including: a receiving unit, configured to receive a scheduling request configuration; a first determining unit, configured to determine physical uplink control channel resources for transmitting scheduling request information based on the scheduling request configuration received by the receiving unit, wherein the scheduling request information is used for a user equipment to request uplink resources from a base station; and a transmitting unit, configured to transmit the scheduling request information on the determined physical uplink control channel resources.

In combination with the third aspect, in a first implementation of the third aspect, the first determining unit is specifically configured to determine, when the scheduling request configuration includes a plurality of parameters indicating physical uplink control channels, a physical uplink control channel for transmitting the scheduling request information according to the parameter, wherein the plurality of parameters indicating the physical uplink control channels respectively indicate scheduling request information corresponding to different base stations; and the transmitting unit is specifically configured to transmit the scheduling request information for requesting uplink resources from a corresponding base station on the determined physical uplink control channel.

In combination with the third aspect and the above-mentioned implementation, in a second implementation of the third aspect, the transmitting unit is further configured to, when the plurality of parameters indicating the physical uplink control channels comprise a parameter of a first physical uplink control channel and a parameter of a second physical uplink control channel, transmit scheduling request information for requesting uplink resources from a first base station on a physical uplink control channel indicated by the parameter of the first physical uplink control channel, and transmit scheduling request information for requesting uplink resources from a second base station on a physical uplink control channel indicated by the parameter of the second physical uplink control channel, wherein the parameter of the first physical uplink control channel is used for indicating the physical uplink control channel for transmitting the scheduling request information for requesting uplink resources from the first base station, and the parameter of the second physical uplink control channel is used for indicating the physical uplink control channel for transmitting the scheduling request information for requesting uplink resources from the second base station.

In combination with the third aspect and the above-mentioned implementations, in a third implementation of the third aspect, the first determining unit is specifically configured to determine, when the scheduling request configuration includes a parameter indicating a transmission period and a subframe offset of scheduling request information, subframes for transmitting scheduling request information for requesting uplink resources from different base stations according to the parameter indicating the transmission period and the subframe offset of the scheduling request information; and the transmitting unit is specifically configured to transmit the scheduling request information for requesting uplink resources from a corresponding base station at a determined subframe.

In combination with the third aspect and the above-mentioned implementations, in a fourth implementation of the third aspect, the transmitting unit is further configured to transmit scheduling request information for requesting uplink resources from a first base station at a subframe at an even position of the determined subframes, and transmit scheduling request information for requesting uplink resources from a second base station at a subframe at an odd position of the determined subframes.

In combination with the third aspect and the above-mentioned implementations, in a fifth implementation of the third aspect, the first determining unit is specifically configured to determine, when the scheduling request configuration includes a plurality of scheduling request sub-configurations, a subframe for transmitting scheduling request information for requesting uplink resources from a corresponding base station according to a parameter indicating a transmission period and a subframe offset of the scheduling request information for requesting uplink resources from the corresponding base station, wherein each of the scheduling request sub-configurations includes a parameter indicating a transmission period and a subframe offset of scheduling request information for requesting uplink resources from a corresponding base station; and the transmitting unit is specifically configured to transmit the scheduling request information for requesting uplink resources from the corresponding base station at the determined subframe.

In combination with the third aspect and the above-mentioned implementations, in a sixth implementation of the third aspect, the first determining unit is further configured to determine, when each of the scheduling request sub-configurations further includes a parameter indicating a physical uplink control channel, a physical uplink control channel for transmitting the scheduling request information according to a parameter indicating the physical uplink control channel; and the transmitting unit is further configured to transmit the scheduling request information for requesting uplink resources from the corresponding base station at the determined subframe and on the determined physical uplink control channel.

In combination with the third aspect and the above-mentioned implementations, in a seventh implementation of the third aspect, the first determining unit is further configured to, before the transmitting unit transmits the scheduling request information on the determined physical uplink control channel resources, determine scheduling request information to be transmitted, and set an information bit for the scheduling request information to be transmitted, wherein the information bit is used for indicating that the scheduling request information is used for requesting uplink resources from a corresponding base station.

In combination with the third aspect and the above-mentioned implementations, in an eighth implementation of the third aspect, if the scheduling request information to be transmitted is used for requesting uplink resources from a first base station, the information bit corresponding to the scheduling request information to be transmitted is set to 0; and if the scheduling request information to be transmitted is used for requesting uplink resources from a second base station, the information bit corresponding to the scheduling request information to be transmitted is set to 1; or if the scheduling request information to be transmitted is used for requesting uplink resources from a first base station, the information bit corresponding to the scheduling request information to be transmitted is set to 10; if the scheduling to-be-transmitted request information is used for requesting uplink resources from a second base station, the information bit corresponding to the scheduling request information to be transmitted is set to 01; and if the scheduling request information to be transmitted is used for simultaneously requesting uplink resources from the first base station and the second base station, the information bit corresponding to the scheduling request information to be transmitted is set to 11.

In combination with the third aspect and the above-mentioned implementations, in a ninth implementation of the third aspect, the first determining unit is further configured to, if the scheduling request information to be transmitted includes a plurality of pieces of scheduling request information for requesting uplink resources from different base stations, determine that the scheduling request information is a piece of scheduling request information with a highest priority according to a preset priority, wherein the preset priority is a priority of a carrier, a priority signaled semi-statically by a higher layer, or a priority of a base station.

In combination with the third aspect and the above-mentioned implementations, in a tenth implementation of the third aspect, the physical uplink control channel resources are physical uplink control channel resources on an uplink carrier corresponding to a macro base station.

In a fourth aspect, another apparatus for transmitting a scheduling request is provided, including: a second determining unit, configured to determine, based on a scheduling request configuration, physical uplink control channel resources for transmitting scheduling request information by a user equipment; and a detecting unit, configured to detect the scheduling request information on the physical uplink control channel resources.

In combination with the fourth aspect, in a first implementation of the fourth aspect, if the scheduling request configuration includes a plurality of parameters indicating physical uplink control channels, each of which is used for indicating a physical uplink control channel used by the user equipment for transmitting scheduling request information for requesting uplink resources from a corresponding base station, the second determining unit is specifically configured to determine, based on the parameters indicating physical uplink control channels, physical uplink control channels used by the user equipment for transmitting scheduling request information for requesting uplink resources from different base stations; and the detecting unit is specifically configured to detect the scheduling request information on the physical uplink control channels.

In combination with the fourth aspect and the above-mentioned implementation, in a second implementation of the fourth aspect, if the scheduling request configuration includes a parameter indicating a transmission period and a subframe offset of scheduling request information, the second determining unit is further configured to determine, based on the parameter indicating the transmission period and the subframe offset of the scheduling request information, subframes for transmitting scheduling request information by the user equipment; and the detecting unit is further configured to detect the scheduling request information on the subframes.

In combination with the fourth aspect and the above-mentioned implementations, in a third implementation of the fourth aspect, the second determining unit is further configured to receive the scheduling request information at a subframe at an odd or an even position of the determined subframes.

In combination with the fourth aspect and the above-mentioned implementations, in a fourth implementation of the fourth aspect, if the scheduling request configuration includes a plurality of scheduling request sub-configurations, each of which is used for configuring scheduling request information for the user equipment to request uplink resources from a corresponding base station; the second determining unit is specifically configured to determine, based on the plurality of scheduling request sub-configurations, physical uplink control channel resources used by the user equipment for transmitting scheduling request information for requesting uplink resources from the apparatus; and the detecting unit is specifically configured to detect the scheduling request information on the physical uplink control channel resources indicated by the scheduling request sub-configurations.

In combination with the fourth aspect and the above-mentioned implementations, in a fifth implementation of the fourth aspect, the detecting unit is further configured to: parse an information bit of the scheduling request information, wherein the information bit is used for indicating that the scheduling request information is used for requesting uplink resources from a corresponding base station; and determine, according to the information bit, whether or not the scheduling request information is intended to be transmitted to the apparatus by the user equipment.

In combination with the fourth aspect and the above-mentioned implementations, in a sixth implementation of the fourth aspect, if a parsed value of the information bit is 0, the scheduling request information is used for requesting uplink resources from a first base station; and if a parsed value of the information bit of the scheduling request information is 1, the scheduling request information is used for requesting uplink resources from a second base station; or if a parsed value of the information bit is 10, the scheduling request information is used for requesting uplink resources from a first base station; if a parsed value of the information bit is 01, the scheduling request information is used for requesting uplink resources from a second base station; and if a parsed value of the information bit is 11, the scheduling request information is used for simultaneously requesting uplink resources from the first base station and the second base station.

In combination with the fourth aspect and the above-mentioned implementations, in a seventh implementation of the fourth aspect, the apparatus further includes a transceiving unit, configured to, if the apparatus is configured in a macro base station, send the scheduling request configuration to the user equipment or to a pico base station through high-level signaling before the second determining unit determines the physical uplink control channel resources for transmitting scheduling request information by a user equipment based on the scheduling request configuration; or if the apparatus is configured in a pico base station, receive the scheduling request configuration sent by a macro base station before the second determining unit determines the physical uplink control channel resources for transmitting scheduling request information by a user equipment based on the scheduling request configuration.

According to a fifth aspect, a user equipment is provided, including: a receiver, configured to receive a scheduling request configuration; a processor, configured to determine physical uplink control channel resources for transmitting scheduling request information based on the scheduling request configuration received by the receiver, wherein the scheduling request information is used for a user equipment to request uplink resources from a base station; and a transmitter, configured to transmit the scheduling request information on the determined physical uplink control channel resources.

In combination with the fifth aspect, in a first implementation of the fifth aspect, the processor is further configured to determine, when the scheduling request configuration includes a plurality of parameters indicating physical uplink control channels, a physical uplink control channel for transmitting the scheduling request information according to the parameter, wherein the plurality of parameters indicating the physical uplink control channels respectively indicate scheduling request information corresponding to different base stations; and the transmitter is further configured to transmit the scheduling request information for requesting uplink resources from a corresponding base station on the determined physical uplink control channel.

In combination with the fifth aspect and the above-mentioned implementation, in a second implementation of the fifth aspect, the processor is further configured to determine, when the scheduling request configuration includes a parameter indicating a transmission period and a subframe offset of scheduling request information, subframes for transmitting scheduling request information for requesting uplink resources from different base stations according to the parameter indicating the transmission period and the subframe offset of the scheduling request information; and the transmitter is further configured to transmit the scheduling request information for requesting uplink resources from a corresponding base station at a determined subframe.

In combination with the fifth aspect and the above-mentioned implementations, in a third implementation of the fifth aspect, the processor is further configured to determine, when the scheduling request configuration includes a plurality of scheduling request sub-configurations, a subframe for transmitting scheduling request information for requesting uplink resources from a corresponding base station according to a parameter indicating a transmission period and a subframe offset of the scheduling request information for requesting uplink resources from the corresponding base station, wherein each of the scheduling request sub-configurations includes a parameter indicating a transmission period and a subframe offset of scheduling request information for requesting uplink resources from a corresponding base station; and the transmitter is further configured to transmit the scheduling request information for requesting uplink resources from the corresponding base station at the determined subframe.

In combination with the fifth aspect and the above-mentioned implementations, in a fourth implementation of the fifth aspect, the processor is further configured to determine, when each of the scheduling request sub-configurations further includes a parameter indicating a physical uplink control channel, a physical uplink control channel for transmitting the scheduling request information according to a parameter indicating the physical uplink control channel; and the transmitter is further configured to transmit the scheduling request information for requesting uplink resources from the corresponding base station at the determined subframe and on the determined physical uplink control channel.

In combination with the fifth aspect and the above-mentioned implementations, in a fifth implementation of the fifth aspect, the processor is further configured to, before the transmitter transmits the scheduling request information on the determined physical uplink control channel resources, determine scheduling request information to be transmitted, and set an information bit for the scheduling request information to be transmitted, wherein the information bit is used for indicating that the scheduling request information is used for requesting uplink resources from a corresponding base station.

In a sixth aspect, a base station is provided, including: a transmitter, configured to transmit a scheduling request configuration to a user equipment; a processor, configured to determine, based on the scheduling request configuration, physical uplink control channel resources for transmitting scheduling request information by the user equipment; and a receiver, configured to receive the scheduling request information transmitted by the user equipment on the physical uplink control channel resources.

In combination with the sixth aspect, in a first implementation of the sixth aspect, if the scheduling request configuration includes a plurality of parameters indicating physical uplink control channels, each of which is used for indicating a physical uplink control channel used by the user equipment for transmitting scheduling request information for requesting uplink resources from a corresponding base station, the processor is further configured to determine, based on the parameters indicating physical uplink control channels, physical uplink control channels used by the user equipment for transmitting scheduling request information for requesting uplink resources from different base stations; and the receiver is further configured to detect the scheduling request information on the physical uplink control channels.

In combination with the sixth aspect and the above-mentioned implementation, in a second implementation of the sixth aspect, if the scheduling request configuration includes a parameter indicating a transmission period and a subframe offset of scheduling request information, the processor is further configured to determine, based on the parameter indicating the transmission period and the subframe offset of the scheduling request information, subframes for transmitting scheduling request information by the user equipment; and the receiver is further configured to detect the scheduling request information on the subframes.

In combination with the sixth aspect and the above-mentioned implementations, in a third implementation of the sixth aspect, the processor is further configured to receive the scheduling request information at a subframe at an odd or an even position of the determined subframes.

In combination with the sixth aspect and the above-mentioned implementations, in a fourth implementation of the sixth aspect, if the scheduling request configuration includes a plurality of scheduling request sub-configurations, each of which is used for configuring scheduling request information for the user equipment to request uplink resources from a corresponding base station; the processor is further configured to determine, based on the plurality of scheduling request sub-configurations, physical uplink control channel resources used by the user equipment for transmitting scheduling request information for requesting uplink resources from the base station; and the receiver is further configured to detect the scheduling request information on the physical uplink control channel resources indicated by the scheduling request sub-configurations.

In combination with the sixth aspect and the above-mentioned implementations, in a fifth implementation of the sixth aspect, the detecting unit is further configured to: parse an information bit of the scheduling request information, wherein the information bit is used for indicating that the scheduling request information is used for requesting uplink resources from a corresponding base station; and determine, according to the information bit, whether or not the scheduling request information is intended to be transmitted to the base station by the user equipment.

The embodiments of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

### BRIEF DESCRIPTION OF DRAWINGS

In order to illustrate the technical solution in the embodiments of the present invention more clearly, a brief introduction on the accompanying drawings needed in the description of the embodiments is given below. Apparently, the accompanying drawings in the description below are merely some embodiments of the present invention, based on which other drawings may also be obtained by those of ordinary skill in the art without any inventive efforts.
Fig. 1 is a schematic view of a macro-pico coupling scenario in an embodiment of the present invention;
Fig. 2 is a flowchart of a method for transmitting a scheduling request according to an embodiment of the present invention;
Fig. 3 is a flowchart of a method for transmitting a scheduling request according to another embodiment of the present invention;
Fig. 4 is a schematic view of structure an apparatus for transmitting a scheduling request according to an embodiment of the present invention;
Fig. 5 is a schematic view structure of a user equipment according to an embodiment of the present invention;
Fig. 6 is a schematic view of structure of an apparatus for transmitting a scheduling request according to another embodiment of the present invention;
Fig. 7 is a schematic view of structure of an apparatus for transmitting a scheduling request according to another embodiment of the present invention; and
Fig. 8 is a schematic view structure of a base station according to an embodiment of the present invention.

### DETAILED DESCRIPTION OF EMBODIMENTS

The technical solution in the embodiments of the present invention will be described clearly and fully below in conjunction with the drawings in the embodiments of the present invention. Evidently, the described embodiments are only a part, but not all, of the embodiments of the present invention. All other embodiments, which may be derived by the persons of ordinary skills in the art based on the embodiments of the present invention without any inventive efforts, shall fall into the protection scope of the present invention.

The technical solution of the present invention may be applied to various communication systems such as a global system of mobile communication (GSM, Global System of Mobile communication), a code division multiple access (CDMA, Code Division Multiple Access) system, wideband code division multiple access wireless (WCDMA, Wideband Code Division Multiple Access Wireless), general packet radio service (GPRS, General Packet Radio Service), LTE and the like.

UE may also be referred to as a mobile terminal (Mobile Terminal), a mobile station (Mobile Station) or the like. UE may communicate with one or more core networks through a radio access network (e.g., RAN, Radio Access Network). The UE exchanges voice and/or data with the radio access network.

A base station may be a base transceiver station (BTS, Base Transceiver Station) in GSM or CDMA, or a Node B (Node B) in WCDMA, or an evolutional Node B (eNB or e-NodeB, evolutional Node B) in LTE. The present invention does not set limitation on the specific form of a base station. However, for purpose of convenient description, the following embodiments are illustrated by taking a Node B as an example. In addition, one base station may support/manage one or more cells (cell), and when UE needs to communicate with a network, one cell is selected by the UE for initiating network access.

Under a scenario of MSA, a macro cell and a pico cell both have capability of receiving SA information. After a UE sends SA information, the SA information is not required to be forwarded through a macro base station as long as a base station in a carrier aggregation system identifies the SA information sent thereto, so that time from which uplink data is served may be prevented from being delayed, thereby improving user experience.

A procedure of a method for transmitting a scheduling request according to an embodiment of the present invention is described in detail hereinafter in conjunction with the accompanying drawings. As shown in Fig. 2, the method includes the following steps:
21, determining, by a user equipment, physical uplink control channel resources for transmitting scheduling request information based on a received scheduling request configuration, wherein the scheduling request information is used for requesting a base station for uplink resources by the user equipment; and
22, transmitting, by the user equipment, the scheduling request information on the determined physical uplink control channel resources.

The physical uplink control channel resources herein are physical uplink control channel resources on an uplink carrier corresponding to a macro base station.

Through frequency domain, time domain, a combination thereof and the like indicated by the scheduling request configuration, the user equipment configures uplink transmission resources for transmitting the scheduling request information, e.g., a subframe, a channel, etc.

In one implementation, when the scheduling request configuration includes a plurality of parameters indicating physical uplink control channels, the user equipment determines, according to the parameter, the physical uplink control channels for transmitting scheduling request information, and then transmits scheduling request information for requesting uplink resources from a corresponding base station on a determined physical uplink control channel. That is, when the scheduling request configuration indicates a frequency-domain configuration, the user equipment may configure frequency domain so as to transmit the scheduling request information on the physical uplink control channel resources.

Taking that there are only two base stations (such as a macro base station and a pico base station) in a system as an example, when the plurality of parameters indicating the physical uplink control channels include a parameter of a first physical uplink control channel and a parameter of a second physical uplink control channel, wherein the parameter of the first physical uplink control channel is used for indicating a physical uplink control channel for transmitting scheduling request information for requesting uplink resources from a first base station, and the parameter of the second physical uplink control channel is used for indicating a physical uplink control channel for transmitting scheduling request information for requesting uplink resources from a second base station. Consequently, the user equipment transmits the scheduling request information for requesting uplink resources from the first base station on the physical uplink control channel indicated by the parameter of the first physical uplink control channel, and transmits the scheduling request information for requesting uplink resources from the second base station on the physical uplink control channel indicated by the parameter of the second physical uplink control channel.

In another implementation, when the scheduling request configuration includes a parameter indicating a transmission period and a subframe offset of scheduling request information, the user equipment determines subframes for transmitting scheduling request information for requesting uplink resources from different base stations according to the parameter indicating the transmission period and the subframe offset of the scheduling request information. The user equipment transmits the scheduling request information for requesting uplink resources from a corresponding base station in a determined subframe. That is, when the scheduling request configuration indicates a time-domain configuration, the user equipment may configure time domain so as to transmit the scheduling request information on the physical uplink control channel resources.

Taking that there are only two base stations (such as a macro base station and a pico base station) in a system as an example, when the scheduling request configuration includes a parameter indicating a transmission period and a subframe offset of the scheduling request information, the user equipment determines subframes for transmitting scheduling request information for requesting uplink resources from different base stations according to the parameter indicating the transmission period and the subframe offset of the scheduling request information. For example, the user equipment transmits scheduling request information for requesting uplink resources from a first base station at a subframe at an even position of the determined subframes, and the user equipment transmits scheduling request information for requesting uplink resources from a second base station at a subframe at an odd position of the determined subframes.

In another alternative implementation, when the scheduling request configuration includes a plurality of scheduling request sub-configurations, each of which includes a parameter indicating a transmission period and a subframe offset of scheduling request information for requesting uplink resources from a corresponding base station, the user equipment determines, according to a parameter indicating a transmission periods and a subframe offset of scheduling request information for requesting uplink resources from a corresponding base station, a subframe for transmitting the scheduling request information for requesting uplink resources from the corresponding base station. Accordingly, the user equipment transmits the scheduling request information for requesting uplink resources from the corresponding base station at the determined subframe.

Moreover, alternatively, each of the scheduling request sub-configurations further includes a parameter indicating a physical uplink control channel. Hence the user equipment may determine a physical uplink control channel for transmitting the scheduling request information according to a parameter indicating the physical uplink control channel. Accordingly, the user equipment transmits the scheduling request information for requesting uplink resources from the corresponding base station at the determined subframe and on the determined physical uplink control channel.

It is thus clear that, in this implementation, when a plurality of scheduling request sub-configurations are employed to indicate a time-domain configuration or time-domain and frequency-domain configurations for the user equipment, the user equipment may carry out time-domain configuration so as to transmit the scheduling request information on the physical uplink control channel resources, or the user equipment may carry out time-domain and frequency-domain configurations so as to transmit the scheduling request information on the physical uplink control channel resources.

In a case that the user equipment configures uplink transmission resources according to a scheduling request configuration indicated by a base station, the user equipment is capable of transmitting the scheduling request information to the base station and the base station is capable of correctly receive the scheduling request information. Moreover, the user equipment may further make a mark on the scheduling request information to be transmitted to different base stations, so that after a base station receives scheduling request information sent by the user equipment, the base station may parse the mark and determine whether or not the scheduling request information is intended to be sent to the base station itself.

Specifically, the user equipment determines scheduling request information to be transmitted, and then sets an information bit for the scheduling request information to be transmitted, wherein the information bit is used for indicating that the scheduling request information is used for requesting uplink resources from a corresponding base station. Subsequently, the user equipment transmits the scheduling request information on the determined physical uplink control channel resources.

Taking that there are only two base stations (such as a macro base station and a pico base station) in a system as an example, if the scheduling request information to be transmitted is used for requesting uplink resources from a first base station, the information bit corresponding to the scheduling request information to be transmitted is set to 0; if the scheduling request information to be transmitted is used for requesting uplink resources from a second base station, the information bit corresponding to the scheduling request information to be transmitted is set to 1. As an alternative, if the scheduling request information to be transmitted is used for requesting the first base station for uplink resources, the information bit corresponding to the scheduling request information to be transmitted is set to 10; if the scheduling request information to be transmitted is used for requesting the second base station for uplink resources, the information bit corresponding to the scheduling request information to be transmitted is set to 01; and if the scheduling request information to be transmitted is used for simultaneously requesting uplink resources from the first base station and the second base station, the information bit corresponding to the scheduling request information to be transmitted is set to 11.

If the scheduling request information to be transmitted includes a plurality of pieces of scheduling request information for requesting uplink resources from different base stations, the user equipment determines a piece of scheduling request information with a highest priority according to a preset priority, transmits the piece of scheduling request information with the highest priority, and discards other piece(s) of scheduling request information. The preset priority is priority of a carrier, priority signaled semi-statically by a higher layer or priority of a base station. When the preset priority is the priority of carriers, for example, a decreasing order of priorities is taken as an increasing order of indexes of the carriers, namely, a carrier with a small carrier index has a relatively high priority. As an alternative, when the preset priority is the priority of base stations, the priority of base stations includes that priority of a macro base station is higher than that of a pico base station.

It can be seen from the foregoing that, the embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

The method for transmitting the scheduling request at a base station side is described below in detail in conjunction with Fig. 3. Since an operation at the base station side corresponds to that at the user equipment side, repeated contents are omitted herein. As shown in Fig.3, the method includes the following steps:
31, determining, by a base station, based on a scheduling request configuration, physical uplink control channel resources for transmitting scheduling request information by a user equipment; and
32, detecting, by the base station, the scheduling request information on the physical uplink control channel resources.

For example, if the base station is a macro base station, the macro base station sends the scheduling request configuration to the user equipment through high-level signaling, then determines the physical uplink control channel resources of the scheduling request information transmitted by the user equipment based on the scheduling request configuration, and detects the scheduling request information on the physical uplink control channel resources.

Alternatively, if the base station is a pico base station, the pico base station has capability of receiving a physical uplink control channel sent on an uplink carrier of a macro base station. As a result, the pico base station receives the scheduling request configuration sent by the macro base station, determines, based on the scheduling request configuration, the physical uplink control channel resources for transmitting scheduling request information by the user equipment, and then detects the scheduling request information on the physical uplink control channel resources. Furthermore, the pico base station detects the scheduling request information on the physical uplink control channel resources, wherein a physical uplink control channel indicated by the physical uplink control channel resources is located on an uplink carrier corresponding to the macro base station.

The following descriptions do not distinguish a macro base station with a pico base station, and execution of the step 31 and the step 32 is described as follows.

In a first implementation, when the scheduling request configuration includes a plurality of parameters indicating physical uplink control channels, and each of the parameters is used for indicating a physical uplink control channel used by the user equipment for transmitting scheduling request information for requesting a corresponding base stations for uplink resources, the base station determines, based on the parameters indicating the physical uplink control channels, physical uplink control channels used by the user equipment for transmitting scheduling request information for requesting uplink resources from different base stations, and then detects the scheduling request information on the physical uplink control channels.

In a second implementation, when the scheduling request configuration includes a parameter indicating a transmission period and a subframe offset of the scheduling request information, the base station determines, based on the parameter indicating the transmission period and the subframe offset of the scheduling request information, subframes for transmitting scheduling request information by the user equipment, and then detects the scheduling request information at the subframes. For example, if only two base stations (such as a macro base station and a pico base station) exist in a system, the base station may receive the scheduling request information in a subframe at an odd or an even position of the determined subframes.

In a third implementation, when the scheduling request configuration includes a plurality of scheduling request sub-configurations and each of the scheduling request sub-configurations is used for configuring scheduling request information for the user equipment to request uplink resources from a corresponding base station, the base station determines, based on the plurality of scheduling request sub-configurations, physical uplink control channel resources used by the user equipment for transmitting scheduling request information for requesting the base station itself for uplink resources, and then detects the scheduling request information on the physical uplink control channel resources indicated by the scheduling request sub-configurations.

For example, the base station parses an information bit of the scheduling request information, wherein the information bit is used for indicating that the scheduling request information is used for requesting uplink resources from a corresponding base station. Consequently, the base station determines, according to the information bit, whether or not the scheduling request information is intended to be transmitted to the base station itself by the user equipment. By taking that there are only two base stations (such as a macro base station and a pico base station) in the system as an example, if a parsed value of the information bit is equal to 0, the scheduling request information is used for requesting uplink resources from a first base station; if the parsed value of the information bit of the scheduling request information is equal to 1, the scheduling request information is used for requesting uplink resources from a second base station; as an alternative, if the parsed value of the information bit is equal to 10, the scheduling request information is used for requesting the first base station for uplink resources; if the parsed value of the information bit is equal to 01, the scheduling request information is used for requesting the second base station for uplink resources; and if the parsed value of the information bit is equal to 11, the scheduling request information is used for simultaneously requesting uplink resources from the first base station and the second base station.

It can be seen from the foregoing that, the embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

The foregoing three implementations may be combined with each other, i.e., any two or all of the frequency-domain configuration, the time-domain configuration and the content identity of the scheduling request information are combined, from which an implementation is obtained and may be used for transmitting the scheduling request information. A specific embodiment is given below. By taking that there are only two base stations (such as a macro base station and a pico base station) in the system as an example, it is described in detail how to set a scheduling request configuration so as to realize transmission of scheduling request information according to the scheduling request configuration. It should be understood that the specific embodiment provided below is merely exemplary, and other specific embodiment may be obtained by one skilled in the art on a basis of understanding the above-mentioned spirit of the present invention.

### A First Embodiment

Step 1: a user equipment receives a scheduling request configuration.

In the step 1, the user equipment receives the scheduling request configuration notified by a base station through high-level signaling, wherein the base station may be a macro base station. The scheduling request configuration may include a first scheduling request configuration and a second scheduling request configuration, wherein the first scheduling request configuration is used for configuring scheduling request information for requesting uplink resources from a first base station, and the second scheduling request configuration is used for configuring scheduling request information for requesting uplink resources from a second base station. The first scheduling request configuration includes a parameter indicating a transmission period and a subframe offset of the scheduling request information for requesting uplink resources from the first base station, and the user equipment determines the transmission period and the subframe offset of the scheduling request information according to the parameter, and determines a subframe for transmitting the scheduling request information for requesting uplink resources from the first base station. The second scheduling request configuration includes a parameter indicating a transmission period and a subframe offset of the scheduling request information for requesting uplink resources from the second base station, and the user equipment determines the transmission period and the subframe offset of the scheduling request information according to the parameter, and determines a subframe for transmitting the scheduling request information for requesting uplink resources from the second base station. The first scheduling request configuration may further include a parameter indicating physical uplink control channel resources, wherein a physical uplink control channel is used for transmitting the scheduling request information for requesting uplink resources from the first base station. The second scheduling request configuration may further include a parameter indicating physical uplink control channel resources, wherein a physical uplink control channel is used for transmitting the scheduling request information for requesting uplink resources from the second base station. The physical uplink control channel resources indicated by the first scheduling request configuration and the second scheduling request configuration herein may be identical or be different.

If the physical uplink control channel resources indicated by the first scheduling request configuration and the second scheduling request configuration are identical, the scheduling request configuration in the step 1 indicates that the scheduling request information for requesting uplink resources from the first base station and the scheduling request information for requesting uplink resources from the second base station are transmitted on a same physical uplink control channel and respectively at different subframes. If the physical uplink control channel resources indicated by the first scheduling request configuration and the second scheduling request configuration are different, the scheduling request configuration in the step 1 indicates that the scheduling request information for requesting uplink resources from the first base station and the scheduling request information for requesting uplink resources from the second base station are respectively transmitted on different physical uplink control channels and at different subframes.

As mentioned above, the first base station may be a macro base station, and the second base station may be a pico base station.

Step 2: the user equipment determines scheduling request information to be transmitted.

In the step 2, the user equipment determines the scheduling request information to be transmitted. The user equipment firstly determines, according to the scheduling request configuration information received in the step 1, whether current subframe is used for transmitting the scheduling request information for requesting uplink resources from the first base station or for transmitting the scheduling request information for requesting uplink resources from the second base station. If the current subframe is used for transmitting the scheduling request information for requesting uplink resources from the first base station, and the user equipment needs to transmit the scheduling request information for requesting uplink resources from the first base station, the scheduling request information to be transmitted that is determined in the step 2 is *d*(0) = 1, wherein *d*(0) is a modulation symbol to be transmitted. If the current subframe is used for transmitting the scheduling request information for requesting uplink resources from the second base station, and the user equipment needs to transmit the scheduling request information for requesting uplink resources from the second base station, the scheduling request information to be transmitted that is determined in the step 2 is *d*(0) = 1, wherein *d*(0) is a modulation symbol to be transmitted.

If it is determined, according to the scheduling request configuration in the step 1, that the scheduling request information to be transmitted at the current subframe includes a plurality of pieces of scheduling request information for requesting uplink resources from different base stations, a piece of scheduling request information with a highest priority is determined according to a preset priority. Subsequently, the piece of scheduling request information with the highest priority is transmitted, and other piece of scheduling request information is discarded. The preset priority may be a priority of a carrier, a priority signaled semi-statically by a higher layer, or a priority of a base station.

Step 3: the user equipment determines physical uplink control channel resources based on the scheduling request configuration received in the step 1, wherein the physical uplink control channel resources are used for transmitting the scheduling request information.

If the first scheduling request configuration and the second scheduling request configuration in the step 1 include parameters indicating the physical uplink control channel resources, the physical uplink control channel resources are acquired in the step 3 according to the parameters indicating the physical uplink control channel resources included in the scheduling request configuration of the step 1. When the first scheduling request configuration and the second scheduling request configuration do not include the parameters indicating the physical uplink control channel resources, if the current subframe is used for transmitting the scheduling request information for requesting uplink resources from the first base station, the physical uplink control channel resources are acquired in the step 3 according to the parameter in the first scheduling request configuration, that is used for indicating the transmission period and the subframe offset of the scheduling request information for requesting uplink resources from the first base station; and if the current subframe is used for transmitting the scheduling request information for requesting uplink resources from the second base station, the physical uplink control channel resources are acquired in the step 3 according to the parameter in the second scheduling request configuration, that is used for indicating the transmission period and the subframe offset of the scheduling request information for requesting uplink resources from the second base station.

Step 4: the user equipment transmits the scheduling request information on the physical uplink control channel resources determined in the step 3.

In the step 4, the user equipment sends the scheduling request information to a base station on the physical uplink control channel resources determined in the step 3. A sending method is the prior art, and is not described redundantly herein.

Step 5: a base station detects scheduling request information transmitted by the user equipment. The step 5 may further include the following steps:
Step 5-1: the base station determines, based on the scheduling request configuration, the physical uplink control channel resources for transmitting scheduling request information by the user equipment. The base station in the step 5-1 may be a macro base station or a pico base station.

If the base station is a macro base station, the step 5-1 further includes the following steps.

Step 5-1-a: the base station sends the scheduling request configuration to the user equipment through high-level signaling.

In the step 5-1-a, the base station may send the scheduling request configuration to the user equipment through radio resource control (RRC, Radio Resource Control) signaling. Related information of the scheduling request configuration is consistent with that in step 1, and is not described redundantly herein.

Step 5-1-b: the base station determines, based on the scheduling request configuration, the physical uplink control channel resources for transmitting scheduling request information by the user equipment.

If the first scheduling request configuration and the second scheduling request configuration in the step 5-1-a include parameters indicating the physical uplink control channel resources, in the step 5-1-b, the base station acquires the physical uplink control channel resources according to the parameters indicating the physical uplink control channel resources included in the scheduling request configuration of the step 1. If the first scheduling request configuration and the second scheduling request configuration do not include the parameters indicating the physical uplink control channel resources, and if the current subframe is a subframe used by the user equipment for transmitting the scheduling request information for requesting uplink resources from the first base station, in the step 5-1-b, the base station acquires the physical uplink control channel resources according to the parameter in the first scheduling request configuration, that is used for indicating the transmission period and the subframe offset of the scheduling request information for requesting uplink resources from the first base station; and if the current subframe is a subframe used by the user equipment for transmitting the scheduling request information for requesting uplink resources from the second base station, in the step 5-1-b, the base station acquires the physical uplink control channel resources according to the parameter in the second scheduling request configuration, that is used for indicating the transmission period and the subframe offset of the scheduling request information for requesting uplink resources from the second base station.

If the base station is a pico base station, the step 5-1 further includes the following steps.

Step 5-1-c: the base station receives the scheduling request configuration sent by a macro base station.

For example, the base station receives the scheduling request configuration sent by the macro base station via an X2 interface. Information related with the scheduling request configuration is consistent with that in the step 1 and is not described repeatedly herein.

Step 5-1-d: the base station determines, based on the scheduling request configuration received in the step 5-1-c, the physical uplink control channel resources for transmitting the scheduling request information by the user equipment.

The step 5-1-d is consistent with the step 5-1-b, and is not described repeatedly herein.

Step 5-2: the base station detects scheduling request information on the physical uplink control channel resources obtained in the step 5-1.

The base station detects the scheduling request information on the physical uplink control channel resources obtained in the step 5-1. If the base station in the step 5-2 is a pico base station, the base station has capability of receiving an uplink carrier of the macro base station. Since the pico base station has capability of receiving a physical uplink control channel sent on an uplink carrier of the macro base station, a physical uplink control channel indicated by the physical uplink control channel resources in the step 5-2 is located on an uplink carrier corresponding to the macro base station.

If information has been detected by the base station on a physical uplink control channel obtained in the step 5-1, it indicates that the user equipment has sent the scheduling request information. Moreover, the scheduling request information sent by the user equipment is further determined according to the following procedure: if the current subframe is used for transmitting the scheduling request information for requesting uplink resources from the first base station, the scheduling request information detected on the physical uplink control channel is a scheduling request for requesting the first base station for uplink resources; and if the current subframe is used for transmitting the scheduling request information for requesting uplink resources from the second base station, the scheduling request information detected on the physical uplink control channel is a scheduling request for requesting the second base station for uplink resources.

According to the scheduling request configuration in the step 5-1, if it is determined that the scheduling request information of the user equipment to be transmitted at the current subframe includes a plurality of pieces of scheduling request information for requesting uplink resources from different base stations, the base station determines, according to a preset priority, that the detected scheduling request information is a piece of scheduling request information with a highest priority in the plurality of pieces of scheduling request information. The preset priority may be a priority of a carrier, a priority signaled semi-statically by a higher layer, or a priority of a base station.

In the embodiment of the present invention, the scheduling request information for requesting uplink resources from different base stations is sent on an uplink carrier corresponding to the macro base station by means of time division multiplexing, thereby solving the problem of how to transmit the scheduling request under the scenario of MSA; meanwhile, the pico base station is enabled to have the capability of receiving an uplink carrier of the macro base station, so that time from which uplink data is served may be prevented from being delayed, thereby improving user experience.

### A Second Embodiment

Step 1: a user equipment receives a scheduling request configuration.

In the step 1, the user equipment receives the scheduling request configuration notified by a base station through high-level signaling, wherein the base station may be a macro base station. The scheduling request configuration includes a parameter indicating a transmission period and a subframe offset of the scheduling request information. Accordingly, the user equipment determines the transmission period and the subframe offset of the scheduling request information according to the parameter, and determines a subframe for transmitting a scheduling request according to the transmission period and the subframe offset. Scheduling request information for requesting uplink resources from different base stations is sent by means of time division multiplexing. For example, when the user equipment aggregates uplink carriers from two base stations, the scheduling request information may be sent according to the following manner: subframes for transmitting a scheduling request are determined according to the transmission period and the subframe offset, wherein a subframe, at an even position of the subframes for transmitting a scheduling request, is used for transmitting scheduling request information for requesting uplink resources from a first base station, and a subframe, at an odd position of the subframes for transmitting a scheduling request, is used for transmitting scheduling request information for requesting uplink resources from a second base station. First subframe of the subframes for transmitting a scheduling request is an even subframe, and so on.

The scheduling request configuration further includes a parameter indicating physical uplink control channel resources, and the parameter is used for indicating the physical uplink control channel resources used by user equipment for transmitting a scheduling request.

The first base station may be a macro base station, and the second base station may be a pico base station.

Step 2: the user equipment determines scheduling request information to be transmitted.

The step 2 is consistent with the step 2 of the first embodiment, and is not described repeatedly herein.

Step 3: the user equipment determines physical uplink control channel resources based on the scheduling request configuration received in the step 1, wherein the physical uplink control channel resources are used for transmitting the scheduling request information.

In the step 3, the physical uplink control channel resources are acquired according to the parameter indicating the physical uplink control channel resources in the scheduling request configuration of the step 1, and a physical uplink control channel indicated by the physical uplink control channel resources may be located on an uplink carrier corresponding to the macro base station.

Step 4: the user equipment transmits the scheduling request information on the physical uplink control channel resources determined in the step 3.

In the step 4, the user equipment sends the scheduling request information on the physical uplink control channel resources determined in step 3 to a base station. A method for sending is the prior art, and is not described redundantly herein.

Step 5: a base station detects scheduling request information transmitted by the user equipment. The step 5 may further include the following steps:
Step 5-1: the base station determines, based on the scheduling request configuration, the physical uplink control channel resources for transmitting scheduling request information by the user equipment. The base station in the step 5-1 may be a macro base station or a pico base station.

If the base station is a macro base station, step 5-1 further includes the following steps.

Step 5-1-a: the base station sends the scheduling request configuration to the user equipment through high-level signaling.

In the step 5-1-a, the base station may send the scheduling request configuration to the user equipment through RRC signaling. Related information of the scheduling request configuration is consistent with that in step 1, and is not described redundantly herein.

Step 5-1-b: the base station determines, based on the scheduling request configuration, the physical uplink control channel resources for transmitting the scheduling request information by the user equipment.

In the step 5-1-b, the base station acquires the physical uplink control channel resources according to the parameter indicating the physical uplink control channel resources in the scheduling request configuration of the step 5-1-a.

If the base station is a pico base station, the step 5-1 further includes the following steps.

Step 5-1-c: the base station receives the scheduling request configuration sent by a macro base station.

In the step 5-1-c, the base station receives the scheduling request configuration sent by the macro base station. Specifically, the base station may receive the scheduling request configuration sent by the macro base station via an X2 interface. Information related with the scheduling request configuration is consistent with that in the step 1 and is not described repeatedly herein.

Step 5-1-d: the base station determines, based on the scheduling request configuration received in the step 5-1-c, the physical uplink control channel resources for transmitting the scheduling request information by the user equipment.

The step 5-1-d is consistent with the step 5-1-b, and is not described repeatedly herein.

Step 5-2: the base station detects scheduling request information on the physical uplink control channel resources obtained in the step 5-1.

In the step 5-2, the base station detects scheduling request information on the physical uplink control channel resources obtained in the step 5-1. If the base station in the step 5-2 is a pico base station, the base station has capability of receiving an uplink carrier of the macro base station, and specifically, the base station has capability of receiving a physical uplink control channel sent on an uplink carrier of the macro base station. A physical uplink control channel indicated by the physical uplink control channel resources in the step 5-2 is located on an uplink carrier corresponding to the macro base station.

In the step 5-2, If information has been detected by the base station on a physical uplink control channel obtained in the step 5-1, it indicates that the user equipment has sent the scheduling request information. Moreover, the scheduling request information sent by the user equipment is further determined according to the following procedure: if the current sub frame is used for transmitting the scheduling request information for requesting uplink resources from the first base station, the scheduling request information detected on the physical uplink control channel is a scheduling request for requesting uplink resources from the first base station; and if the current subframe is used for transmitting the scheduling request information for requesting uplink resources from the second base station, the scheduling request information detected on the physical uplink control channel is a scheduling request for requesting uplink resources from the second base station.

In the embodiment of the present invention, the scheduling request information for requesting uplink resources from different base stations is sent on an uplink carrier corresponding to the macro base station by means of time division multiplexing, thereby solving the problem of how to transmit the scheduling request under the scenario of MSA; meanwhile, the pico base station is enabled to have the capability of receiving an uplink carrier of the macro base station, so that time from which uplink data is served may be prevented from being delayed, thereby improving user experience.

### A Third Embodiment

Step 1: a user equipment receives a scheduling request configuration.

In the step 1, the user equipment receives the scheduling request configuration notified by a base station through high-level signaling, wherein the base station may be a macro base station. The scheduling request configuration includes a parameter indicating a transmission period and a subframe offset of scheduling request information. Accordingly, the user equipment determines the transmission period and the subframe offset of scheduling request information according to the parameter, and determines a subframe for transmitting a scheduling request according to the transmission period and the subframe offset. The scheduling request configuration further includes a parameter indicating physical uplink control channel resources, and the parameter is used for indicating the physical uplink control channel resources for sending a scheduling request by the user equipment.

Step 2: the user equipment determines scheduling request information to be transmitted.

In the step 2, the user equipment may determine the scheduling request information to be transmitted according to one of the following manners:
a first manner: the user equipment transmits scheduling request information of one bit. Specifically, if the scheduling request information to be transmitted is used for requesting for uplink resources of a first base station, an information bit corresponding to the scheduling request information to be transmitted is set to 0; and if the scheduling request information to be transmitted is used for requesting for uplink resources of a second base station, the information bit corresponding to the scheduling request information to be transmitted is set to 1; and
a second manner: the user equipment transmits scheduling request information of 2 bits. Specifically, if the scheduling request information to be transmitted is used for requesting for uplink resources of the first base station, information bits corresponding to the scheduling request information to be transmitted are set to 10; if the scheduling request information to be transmitted is used for requesting for uplink resources of the second base station, the information bits corresponding to the scheduling request information to be transmitted are set to 01; and if the scheduling request information to be transmitted is used for simultaneously requesting for uplink resources of the first base station and the second base station, the information bits corresponding to the scheduling request information to be transmitted are set to 11.

It should be understood that the first base station in the step 2 may be a macro base station, and the second base station may be a pico base station. However, the present invention is not limited to the foregoing description.

Step 3: the user equipment determines physical uplink control channel resources based on the scheduling request configuration received in the step 1, wherein the physical uplink control channel resources are used for transmitting the scheduling request information.

In the step 3, the physical uplink control channel resources are acquired according to the parameter indicating the physical uplink control channel resources in the scheduling request configuration of the step 1, and a physical uplink control channel indicated by the physical uplink control channel resources may be located on an uplink carrier corresponding to the macro base station.

Step 4: the user equipment transmits the scheduling request information on the physical uplink control channel resources determined in the step 3.

In the step 4, the user equipment sends the scheduling request information to a base station on the physical uplink control channel resources determined in the step 3. A sending method is the prior art, and is not described redundantly herein.

Step 5: a base station detects scheduling request information transmitted by the user equipment. The step 5 may further include the following steps:
Step 5-1: the base station determines, based on the scheduling request configuration, the physical uplink control channel resources for transmitting the scheduling request information by the user equipment. The base station in the step 5-1 may include a macro base station and a pico base station.

If the base station is a macro base station, the step 5-1 further includes the following steps.

Step 5-1-a: the base station sends the scheduling request configuration to the user equipment through high-level signaling.

In the step 5-1-a, the base station may send the scheduling request configuration to the user equipment through RRC signaling. Related information of the scheduling request configuration is consistent with that in step 1, and is not described redundantly herein.

Step 5-1-b: the base station determines, based on the scheduling request configuration, the physical uplink control channel resources for transmitting the scheduling request information by the user equipment.

In the step 5-1-b, the base station acquires the physical uplink control channel resources according to the parameter indicating the physical uplink control channel resources in the scheduling request configuration of the step 5-1-a.

If the base station is a pico base station, the step 5-1 further includes the following steps.

Step 5-1-c: the base station receives the scheduling request configuration sent by a macro base station.

In the step 5-1-c, the base station receives the scheduling request configuration sent by the macro base station. Specifically, the base station may receive the scheduling request configuration sent by the macro base station via an X2 interface. Information related with the scheduling request configuration is consistent with that in the step 1 and is not described repeatedly herein.

Step 5-1-d: the base station determines, based on the scheduling request configuration received in the step 5-1-c, the physical uplink control channel resources for transmitting the scheduling request information by the user equipment.

The step 5-1-d is consistent with the step 5-1-b, and is not described repeatedly herein.

Step 5-2: the base station detects scheduling request information on the physical uplink control channel resources obtained in the step 5-1.

In the step 5-2, the base station detects scheduling request information on the physical uplink control channel resources obtained in the step 5-1. If the base station in the step 5-2 is a pico base station, the base station has capability of receiving an uplink carrier of the macro base station, and specifically, the base station has capability of receiving a physical uplink control channel sent on an uplink carrier of the macro base station. A physical uplink control channel indicated by the physical uplink control channel resources in the step 5-2 is located on an uplink carrier corresponding to the macro base station.

In the step 5-2, if information has been detected by the base station on the physical uplink control channel obtained in the step 5-1, it indicates that the user equipment has sent the scheduling request information. Moreover, the scheduling request information sent by the user equipment is further determined according to the following procedure:
if the scheduling request information to be transmitted is determined by adopting the first manner of the step 2, the step 5-2 is carried out in the following manner: if the information bit of the detected scheduling request information is set to 0, the scheduling request information is used for requesting for uplink resources of the first base station; and if the information bit of the detected scheduling request information is set to 1, the scheduling request information is used for requesting for uplink resources of the second base station; and
if the scheduling request information to be transmitted is determined by adopting the second manner of the step 2, the step 5-2 is carried out in the following manner: if the information bits of the detected scheduling request information are set to 10, the scheduling request information is used for requesting for uplink resources of the first base station; if the information bits of the detected scheduling request information are set to 01, the scheduling request information is used for requesting for uplink resources of the second base station; and if the information bits of the detected scheduling request information are set to 11, the scheduling request information is used for simultaneously requesting for uplink resources of the first base station and the second base station.

In the embodiment of the present invention, different information states are employed to indicate scheduling request information for requesting uplink resources from different base stations, thereby solving the problem of how to transmit the scheduling request under the scenario of MSA; meanwhile, the pico base station is enabled to have the capability of receiving an uplink carrier of the macro base station, so that time from which uplink data is served may be prevented from being delayed, thereby improving user experience.

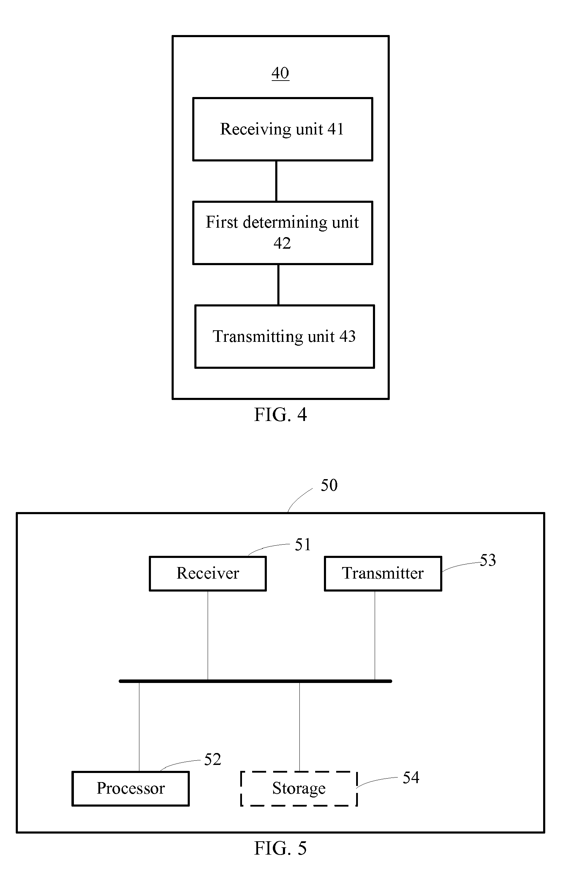

An apparatus for transmitting a scheduling request according to an embodiment of the present invention is described in detail below in conjunction with the accompanying drawings. As shown in Fig. 4, the apparatus 40 includes a receiving unit 41, a first determining unit 42 and a transmitting unit 43, wherein the receiving unit 41 is configured to receive a scheduling request configuration; the first determining unit 42 is configured to determine physical uplink control channel resources for transmitting scheduling request information based on the received scheduling request configuration, wherein the scheduling request information is used for a user equipment to request uplink resources from a base station; and the transmitting unit 43 is configured to transmit the scheduling request information on the determined physical uplink control channel resources.

Specifically, when the scheduling request configuration includes a plurality of parameters indicating physical uplink control channels, the first determining unit 42 is configured to determine, according to the parameter, a physical uplink control channel for transmitting scheduling request information. The transmitting unit 43 is configured to transmit the scheduling request information for requesting uplink resources from a corresponding base station on the physical uplink control channel.

Further, when the plurality of parameters indicating the physical uplink control channels include a parameter of a first physical uplink control channel and a parameter of a second physical uplink control channel, the transmitting unit 43 is configured to transmit scheduling request information for requesting uplink resources from a first base station on a physical uplink control channel indicated by the parameter of the first physical uplink control channel, and transmit scheduling request information for requesting uplink resources from a second base station on a physical uplink control channel indicated by the parameter of the second physical uplink control channel, wherein the parameter of the first physical uplink control channel is used for indicating the physical uplink control channel for transmitting the scheduling request information for requesting uplink resources from the first base station, and the parameter of the second physical uplink control channel is used for indicating the physical uplink control channel for transmitting the scheduling request information for requesting uplink resources from the second base station.

As an alternative, specifically, when the scheduling request configuration includes a parameter indicating a transmission period and a subframe offset of scheduling request information, the first determining unit 42 is configured to determine, according to the parameter indicating the transmission period and the subframe offset of scheduling request information, subframes for transmitting scheduling request information for requesting uplink resources from different base stations. The transmitting unit 43 is further configured to transmit the scheduling request information for requesting uplink resources from a corresponding base station at a determined subframe.

Further, the transmitting unit 43 is further configured to transmit scheduling request information for requesting uplink resources from a first base station at a subframe at an even position of the determined subframes, and transmit scheduling request information for requesting uplink resources from a second base station at a subframe at an odd position of the determined subframes.

Or, specifically, when the scheduling request configuration includes a plurality of scheduling request sub-configurations, the first determining unit 42 is configured to determine, according to a parameter indicating a transmission period and a subframe offset of scheduling request information for requesting uplink resources from a corresponding base station, a subframe for the transmitting scheduling request information for requesting uplink resources from the corresponding base station, wherein each of the scheduling request sub-configurations includes a parameter indicating a transmission period and a subframe offset of scheduling request information for requesting uplink resources from a corresponding base station. The transmitting unit 43 is further configured to transmit the scheduling request information for requesting uplink resources from the corresponding base station at the determined subframe.

Alternatively, when each of the scheduling request sub-configurations further includes a parameter indicating a physical uplink control channel, the first determining unit 42 is further configured to determine, according to a parameter indicating a physical uplink control channel, the physical uplink control channel for transmitting the scheduling request information. The transmitting unit 43 is further configured to transmit the scheduling request information for requesting uplink resources from the corresponding base station at the determined subframe and on the determined physical uplink control channel.

Alternatively, before the transmitting unit 43 transmits the scheduling request information on the determined physical uplink control channel resources, the first determining unit 42 is further configured to determine scheduling request information to be transmitted, and set an information bit for the scheduling request information to be transmitted, wherein the information bit is used for indicating that the scheduling request information is used for requesting uplink resources from a corresponding base station. If the scheduling request information to be transmitted is used for requesting uplink resources from a first base station, the information bit corresponding to the scheduling request information to be transmitted is set to 0; and if the scheduling request information to be transmitted is used for requesting uplink resources from a second base station, the information bit corresponding to the scheduling request information to be transmitted is set to 1; or, if the scheduling request information to be transmitted is used for requesting uplink resources from a first base station, the information bit corresponding to the scheduling request information to be transmitted is set to 10; if the scheduling to-be-transmitted request information is used for requesting uplink resources from a second base station, the information bit corresponding to the scheduling request information to be transmitted is set to 01; and if the scheduling request information to be transmitted is used for simultaneously requesting uplink resources from the first base station and the second base station, the information bit corresponding to the scheduling request information to be transmitted is set to 11.

Alternatively, if the scheduling request information to be transmitted includes a plurality of pieces of scheduling request information for requesting uplink resources from different base stations, the first determining unit 42 is further configured to determining that the scheduling request information is a piece of scheduling request information with a highest priority according to a preset priority, wherein the preset priority is a priority of a carrier, a priority signaled semi-statically by a higher layer, or a priority of a base station.

The above-mentioned physical uplink control channel resources are physical uplink control channel resources on an uplink carrier corresponding to a macro base station.

It can be seen from the foregoing that, the embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

Fig. 5 shows a user equipment 50 according to an embodiment of the present invention. The user equipment 50 includes a receiver 51, a processor 52 and a transmitter 53.

Specifically, the receiver 51 may be configured to receive a scheduling request configuration. The processor 52 may be configured to determine, based on the scheduling request configuration received by the receiver 51, physical uplink control channel resources for transmitting scheduling request information, wherein the scheduling request information is used for a user equipment to request uplink resources from a base station. The transmitter 53 may be configured to transmit the scheduling request information on the determined physical uplink control channel resources. Moreover, the user equipment may further include a storage 54. The storage 54 may store instructions corresponding to related steps of the method for transmitting the scheduling request of the embodiment of the present invention that is realized on the user equipment side, and the processor 52 implements the method for transmitting the scheduling request in the embodiment of the present invention by executing the instructions in the storage 54.

Specifically, when the scheduling request configuration includes a plurality of parameters indicating physical uplink control channels, the processor 52 is configured to determine, according to the parameter, a physical uplink control channel for transmitting the scheduling request information, wherein the plurality of parameters indicating the physical uplink control channels respectively indicate scheduling request information corresponding to different base stations; and the transmitter 53 is configured to transmit the scheduling request information for requesting uplink resources from a corresponding base station on the determined physical uplink control channel.

As an alternative, when the scheduling request configuration includes a parameter indicating a transmission period and a subframe offset of scheduling request information, the processor 52 is configured to determine, according to the parameter indicating the transmission period and the subframe offset of scheduling request information, subframes for transmitting scheduling request information for requesting uplink resources from different base stations; and the transmitter 53 is configured to transmit the scheduling request information for requesting uplink resources from a corresponding base station at a determined subframe.

As another alternative, when the scheduling request configuration includes a plurality of scheduling request sub-configurations, the processor 52 is configured to determine, according to a parameter indicating a transmission period and a subframe offset of scheduling request information for requesting uplink resources from a corresponding base station, a subframe for transmitting the scheduling request information for requesting uplink resources from the corresponding base station, wherein each of the scheduling request sub-configurations includes a parameter indicating a transmission period and a subframe offset of scheduling request information for requesting uplink resources from a corresponding base station; and the transmitter 53 is configured to transmit the scheduling request information for requesting uplink resources from the corresponding base station at the determined subframe.

Or, when each of the scheduling request sub-configurations further includes a parameter indicating a physical uplink control channel, the processor 52 is further configured to determine, according to a parameter indicating a physical uplink control channel, the physical uplink control channel for transmitting the scheduling request information; and the transmitter 53 is further configured to transmit the scheduling request information for requesting uplink resources from the corresponding base station at the determined subframe and on the determined physical uplink control channel.

Or, before the transmitter transmits the scheduling request information on the determined physical uplink control channel resources, the processor 52 is further configured to determine scheduling request information to be transmitted, and set an information bit for the scheduling request information to be transmitted, wherein the information bit is used for indicating that the scheduling request information is used for requesting uplink resources from a corresponding base station.

It can be seen from the foregoing that, the embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

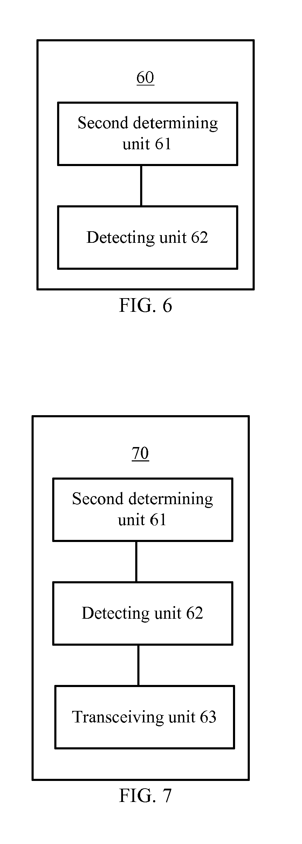

An apparatus 60 for transmitting a scheduling request shown in Fig. 6 includes a second determining unit 61 and a detecting unit 62, wherein the second determining unit 61 is configured to determine, based on a scheduling request configuration, physical uplink control channel resources for transmitting scheduling request information by a user equipment. The detecting unit 62 is configured to detect the scheduling request information on the physical uplink control channel resources.

Specifically, if the scheduling request configuration includes a plurality of parameters indicating physical uplink control channels, each of which is used for indicating a physical uplink control channel used by the user equipment for transmitting scheduling request information for requesting uplink resources from a corresponding base station, the second determining unit 61 is further configured to determine, based on the parameters indicating physical uplink control channels, physical uplink control channels used by the user equipment for transmitting scheduling request information for requesting uplink resources from different base stations; and the detecting unit 62 is further configured to detect the scheduling request information on the physical uplink control channels.

Or, if the scheduling request configuration includes a parameter indicating a transmission period and a subframe offset of scheduling request information, the second determining unit 61 is further configured to determine, based on the parameter indicating the transmission period and the subframe offset of the scheduling request information, subframes for transmitting scheduling request information by the user equipment; and the detecting unit 62 is further configured to detect the scheduling request information on the subframes.

Specifically, if the scheduling request configuration includes a plurality of scheduling request sub-configurations, each of which is used for configuring scheduling request information for the user equipment to request uplink resources from a corresponding base station,
the second determining unit 61 is further configured to determine, based on the plurality of scheduling request sub-configurations, physical uplink control channel resources used by the user equipment for transmitting scheduling request information for requesting uplink resources from the apparatus; and the detecting unit 62 is further configured to detect the scheduling request information on the physical uplink control channel resources indicated by the scheduling request sub-configurations.

Alternatively, the detecting unit 62 is further configured to: parse an information bit of the scheduling request information, wherein the information bit is used for indicating that the scheduling request information is used for requesting uplink resources from a corresponding base station; and determine, according to the information bit, whether or not the scheduling request information is intended to be transmitted to the apparatus by the user equipment. If a parsed value of the information bit is 0, the scheduling request information is used for requesting uplink resources from a first base station; and if a parsed value of the information bit of the scheduling request information is 1, the scheduling request information is used for requesting uplink resources from a second base station; or, if a parsed value of the information bit is 10, the scheduling request information is used for requesting uplink resources from a first base station; if a parsed value of the information bit is 01, the scheduling request information is used for requesting uplink resources from a second base station; and if a parsed value of the information bit is 11, the scheduling request information is used for simultaneously requesting uplink resources from the first base station and the second base station.

As shown in Fig. 7, a transmitting apparatus 70 for transmitting a scheduling request includes a second determining unit 61, a detecting unit 62 and a transceiving unit 63. Here, the second determining unit 61 and the detecting unit 62 are the same as the second determining unit 61 and the detecting unit 62 in Fig. 6.

If the apparatus 70 is configured in a macro base station, before the second determining unit 62 determines, based on the scheduling request configuration, the physical uplink control channel resources for transmitting scheduling request information by the user equipment based on the scheduling request configuration, the transceiving unit 63 is further configured to send the scheduling request configuration to the user equipment or to a pico base station through high-level signaling.

If the apparatus 70 is configured in a pico base station, before the second determining unit 62 determines the physical uplink control channel resources for transmitting scheduling request information by the user equipment based on the scheduling request configuration, the transceiving unit 63 is further configured to receive the scheduling request configuration sent by a macro base station.

It can be seen from the foregoing that, the embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

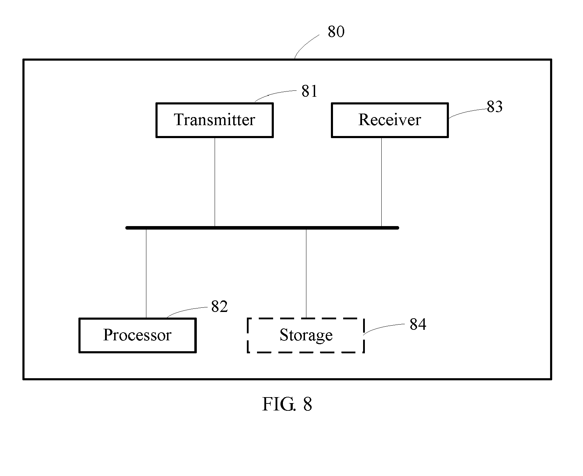

Fig. 8 shows a schematic view of structure of a base station according to an embodiment of the present invention, wherein the base station 80 includes a transmitter 81, a processor 82 and a receiver 83. The transmitter 81 is configured to transmit a scheduling request configuration to a user equipment. The processor 82 is configured to determine, based on the scheduling request configuration, physical uplink control channel resources for transmitting scheduling request information by the user equipment. The receiver 83 is configured to receive the scheduling request information transmitted by the user equipment on the physical uplink control channel resources. Moreover, the base station 80 may further include a storage 84. The storage 84 may store instructions corresponding to related steps of the method for transmitting the scheduling request of the embodiment of the present invention that is realized on the base station side, and the processor 82 implements the method for transmitting the scheduling request in the embodiment of the present invention by executing the instructions in the storage 54.

Specifically, if the scheduling request configuration includes a plurality of parameters indicating physical uplink control channels, each of which is used for indicating a physical uplink control channel used by the user equipment for transmitting scheduling request information for requesting uplink resources from a corresponding base station, the processor 82 is further configured to determine, based on the parameters indicating physical uplink control channels, the physical uplink control channels used by the user equipment for transmitting scheduling request information for requesting uplink resources from different base stations; and the receiver 83 is further configured to detect the scheduling request information on the physical uplink control channels.

Or, if the scheduling request configuration includes a parameter indicating a transmission period and a subframe offset of scheduling request information, the processor 82 is further configured to determine, based on the parameter indicating the transmission period and the subframe offset of the scheduling request information, subframes for transmitting scheduling request information by the user equipment; and the receiver 83 is further configured to detect the scheduling request information on the subframes.

Further, the processor 82 is further configured to receive the scheduling request information at a subframe at an odd or an even position of the determined subframes.

Or, if the scheduling request configuration includes a plurality of scheduling request sub-configurations, each of which is used for configuring scheduling request information for the user equipment to request uplink resources from a corresponding base station, the processor 82 is further configured to determine, based on the plurality of scheduling request sub-configurations, physical uplink control channel resources used by the user equipment for transmitting scheduling request information for requesting uplink resources from the base station; and the receiver 83 is further configured to detect the scheduling request information on the physical uplink control channel resources indicated by the scheduling request sub-configurations.

Or, the processor 82 is further configured to: parse an information bit of the scheduling request information, wherein the information bit is used for indicating that the scheduling request information is used for requesting uplink resources from a corresponding base station; and determine, according to the information bit, whether or not the scheduling request information is intended to be transmitted to the base station itself by the user equipment.

It can be seen from the foregoing that, the embodiment of the present invention may solve the problem of how to transmit the scheduling request information under the scenario of MSA through the scheduling request configuration (for example, time-domain configuration, frequency-domain configuration and a combined configuration thereof), content identity of the scheduling request information, a combination thereof and the like, so that time from which uplink data is served may be prevented from being delayed, thereby improving user experience.

It should be understood that the solution described by each claim of the present invention shall also be regarded as an embodiment, and characteristics in the claims may be combined, for example, the steps of different branches executed after the detemining step in the present invention may be regarded as different embodiments.

Those of ordinary skill in the art may realize that, the units and algorithmic steps of the respective examples, described in the embodiments that are disclosed in the present invention, may be implemented by means of an electronic hardware or a combination of a computer software and an electronic hardware. Whether these functions are executed by means of a hardware or software depends on a specific application and a design constraint condition of the technical solution. For each specific application, professionals may implement the described functions by employing different methods, but this implementation shall not be regarded as beyond the scope of the present invention.

One skilled in the art may clearly appreciate that, for the purpose of convenience and brevity of description, a specific working process of the above-described system, apparatuses and units may be referred to a corresponding process in the embodiments of the aforementioned method, and is not described redundantly herein.

In several embodiments provided by the present application, it should be appreciated that the disclosed system, apparatuses and method may be implemented in other manner. For example, the embodiments of the apparatuses described above are merely exemplary, for instance, division of the units is merely a division according to a logic function, and other division manner may be adopted in practice, e.g., a plurality of units or components may be combined or integrated in another system, or some characteristics may be omitted or are not executed. From another point of view, the displayed or discussed mutual coupling or direct coupling or communication connection may be indirect coupling or communication connection through some interfaces, apparatuses or units, and may be in electrical, mechanical or other form.

The units illustrated as separate components may be physically separated or not, and a component displayed as a unit may be a physical unit or not, that is to say, the component may be located at one place or may be distributed on a plurality of network elements. The objective of the solution of the present embodiment may be realized by selecting part or all of the units according to actual needs.

In addition, in various embodiments of the present invention, the respective functional units may be integrated in one processing unit, or the function units may separately and physically exist, or two or more units may be integrated into one unit.

If the functions are implemented by means of a software functional unit and sold or used as an independent product, the functions may be stored in a computer-readable storage medium. Based on such understanding, the technical solution of the present invention substantially, or part of the present invention making contribution to the prior art, or part of the technical solution, may be embodied in a form of a software product, and the computer software product is stored in a storage medium, which includes a plurality of instructions enabling one computer device (which may be a personal computer, a server, a network device or the like) to execute all or part of the steps in the method of the respective embodiments of the present invention. The aforementioned storage medium includes various media capable of storing a program code, such as a USB disk, a mobile hard disk, a read-only memory (ROM, Read-Only Memory), a random access memory (RAM, Random Access Memory), a disk, an optical disk or the like.

The foregoing descriptions are merely specific implementations of the present invention, to which the scope of the present invention is not limited, any skilled in the art may readily conceive a variation or substitution within the disclosed technical scope of the present invention, and the variation or substitution shall fall into the protection scope of the present invention. Thus, the protection scope of the present invention shall be defined by the scope of the claims.

## Claims

1. A method for transmitting a scheduling request, comprising:
determining, by a user equipment, physical uplink control channel resources for transmitting scheduling request information based on a received scheduling request configuration, wherein the scheduling request information is used for the user equipment to request uplink resources from a base station; and
transmitting, by the user equipment, the scheduling request information on the determined physical uplink control channel resources.

2. The method of claim 1, wherein the determining, by a user equipment, physical uplink control channel resources for transmitting scheduling request information based on a received scheduling request configuration, comprises:
determining, by the user equipment, when the scheduling request configuration comprises a plurality of parameters indicating physical uplink control channels, a physical uplink control channel for transmitting the scheduling request information according to the plurality of parameters, wherein the plurality of parameters indicating the physical uplink control channels respectively indicate scheduling request information corresponding to different base stations; and
wherein the transmitting, by the user equipment, the scheduling request information on the determined physical uplink control channel resources, comprises:
transmitting, by the user equipment, the scheduling request information for requesting uplink resources from a corresponding base station on the determined physical uplink control channel.

3. The method of claim 2, wherein the plurality of parameters indicating the physical uplink control channel comprise a parameter of a first physical uplink control channel and a parameter of a second physical uplink control channel, wherein the parameter of the first physical uplink control channel is used for indicating a physical uplink control channel for transmitting scheduling request information for requesting uplink resources from a first base station, and the parameter of the second physical uplink control channel is used for indicating a physical uplink control channel for transmitting scheduling request information for requesting uplink resources from a second base station; and
wherein the transmitting, by the user equipment, the scheduling request information on the determined physical uplink control channel resources, comprises:
transmitting, by the user equipment, the scheduling request information for requesting uplink resources from the first base station on the physical uplink control channel indicated by the parameter of the first physical uplink control channel, and transmitting the scheduling request information for requesting uplink resources from the second base station on the physical uplink control channel indicated by the parameter of the second physical uplink control channel.

4. The method of claim 1 or 2, wherein the determining, by a user equipment, physical uplink control channel resources for transmitting scheduling request information based on a received scheduling request configuration, comprises:
determining, by the user equipment, when the scheduling request configuration comprises a parameter indicating a transmission period and a subframe offset of scheduling request information, subframes for transmitting scheduling request information for requesting uplink resources from different base stations according to the parameter indicating the transmission period and the subframe offset of scheduling request information; and
wherein the transmitting, by the user equipment, the scheduling request information on the determined physical uplink control channel resources, comprises:
transmitting, by the user equipment, the scheduling request information for requesting uplink resources from a corresponding base station at a determined subframe.

5. The method of claim 4, wherein the transmitting, by the user equipment, the scheduling request information for requesting uplink resources from a corresponding base station at a determined subframe, comprises:
transmitting, by the user equipment, the scheduling request information for requesting uplink resources from a first base station at a subframe at an even position of the determined subframes, and transmitting, by the user equipment, the scheduling request information for requesting uplink resources from a second base station at a subframe at an odd position of the determined subframes.

6. The method of claim 1, wherein the determining, by a user equipment, physical uplink control channel resources for transmitting scheduling request information based on a received scheduling request configuration, comprises:
determining, by the user equipment, when the scheduling request configuration comprises a plurality of scheduling request sub-configurations, wherein each scheduling request sub-configuration comprises a parameter indicating a transmission period and a subframe offset of scheduling request information for requesting uplink resources from a corresponding base station, a subframe for transmitting scheduling request information for requesting uplink resources from a corresponding base station according to a parameter indicating a transmission period and a subframe offset of the scheduling request information for requesting uplink resources from the corresponding base station; and
wherein the transmitting, by the user equipment, the scheduling request information on the determined physical uplink control channel resources, comprises:
transmitting, by the user equipment, the scheduling request information for requesting uplink resources from the corresponding base station at the determined subframe.

7. The method of claim 6, wherein the determining, by a user equipment, physical uplink control channel resources for transmitting scheduling request information based on a received scheduling request configuration, further comprises:
determining, by the user equipment, when each of the scheduling request sub-configurations further comprises a parameter indicating a physical uplink control channel, a physical uplink control channel for transmitting the scheduling request information according to a parameter indicating the physical uplink control channel; and
wherein the transmitting, by the user equipment, the scheduling request information on the determined physical uplink control channel resources, comprises:
transmitting, by the user equipment, the scheduling request information for requesting uplink resources from the corresponding base station at the determined subframe and on the determined physical uplink control channel.

8. The method of any one of claims 1 to 7, wherein before the transmitting, by the user equipment, the scheduling request information on the determined physical uplink control channel resources, the method further comprises:
determining, by the user equipment, scheduling request information to be transmitted; and
setting, by the user equipment, an information bit for the scheduling request information to be transmitted, wherein the information bit is used for indicating that the scheduling request information is used for requesting uplink resources from a corresponding base station.

9. The method of claim 8, wherein if the scheduling request information to be transmitted is used for requesting uplink resources from a first base station, the information bit corresponding to the scheduling request information to be transmitted is set to 0; and if the scheduling request information to be transmitted is used for requesting uplink resources from a second base station, the information bit corresponding to the scheduling request information to be transmitted is set to 1; or
wherein if the scheduling request information to be transmitted is used for requesting uplink resources from a first base station, the information bit corresponding to the scheduling request information to be transmitted is set to 10; if the scheduling to-be-transmitted request information is used for requesting uplink resources from a second base station, the information bit corresponding to the scheduling request information to be transmitted is set to 01; and if the scheduling request information to be transmitted is used for simultaneously requesting uplink resources from the first base station and the second base station, the information bit corresponding to the scheduling request information to be transmitted is set to 11.

10. The method of claim 8 or 9, wherein the determining, by the user equipment, scheduling request information to be transmitted, further comprises:
determining, by the user equipment, if the scheduling request information to be transmitted comprises a plurality of pieces of scheduling request information for requesting uplink resources from different base stations, that the scheduling request information is a piece of scheduling request information with a highest priority according to a preset priority.

11. The method of claim 10, wherein the preset priority is a priority of a carrier, a priority signaled semi-statically by a higher layer, or a priority of a base station.

12. The method of any one of claims 1 to 11, wherein the physical uplink control channel resources are physical uplink control channel resources on an uplink carrier corresponding to a macro base station.

13. A method for transmitting a scheduling request, comprising:
determining, by a base station, based on a scheduling request configuration, physical uplink control channel resources for transmitting scheduling request information by a user equipment; and
detecting, by the base station, the scheduling request information on the physical uplink control channel resources.

14. The method of claim 13, wherein if the scheduling request configuration comprises a plurality of parameters indicating physical uplink control channels, each of which is used for indicating a physical uplink control channel used by the user equipment for transmitting scheduling request information for requesting uplink resources from a corresponding base station,
the determining, by a base station, based on a scheduling request configuration, physical uplink control channel resources for transmitting scheduling request information by a user equipment, comprises:
determining, by the base station, based on the parameters indicating physical uplink control channels, the physical uplink control channels used by the user equipment for transmitting scheduling request information for requesting uplink resources from different base stations; and
the detecting, by the base station, the scheduling request information on the physical uplink control channel resources, comprises:
detecting, by the base station, the scheduling request information on the physical uplink control channels.

15. The method of claim 13 or 14, wherein if the scheduling request configuration comprises a parameter indicating a transmission period and a subframe offset of scheduling request information,
the determining, by a base station, based on a scheduling request configuration, physical uplink control channel resources for transmitting scheduling request information by a user equipment, comprises:
determining, by the base station, based on the parameter indicating the transmission period and the subframe offset of scheduling request information, subframes for transmitting scheduling request information by the user equipment; and
the detecting, by the base station, the scheduling request information on the determined physical uplink control channels, comprises:
detecting, by the base station, the scheduling request information on the subframes.

16. The method of claim 15, wherein the determining, by the base station, based on the parameter indicating the transmission period and the subframe offset of the scheduling request information, subframes for transmitting scheduling request information by the user equipment, comprises:
receiving, by the base station, the scheduling request information at a subframe at an odd or an even position of the determined subframes.

17. The method of claim 13, wherein if the scheduling request configuration comprises a plurality of scheduling request sub-configurations, each of which is used for configuring scheduling request information for the user equipment to request uplink resources from a corresponding base station,
the determining, by a base station, based on a scheduling request configuration, physical uplink control channel resources for transmitting scheduling request information by a user equipment, comprises:
determining, by the base station, based on the plurality of scheduling request sub-configurations, physical uplink control channel resources used by the user equipment for transmitting scheduling request information for requesting uplink resources from the base station; and
the detecting, by the base station, the scheduling request information on the physical uplink control channel resources, comprises:
detecting, by the base station, the scheduling request information on the physical uplink control channel resources indicated by the scheduling request sub-configurations.

18. The method of any one of claims 13 to 17, wherein the detecting, by the base station, the scheduling request information on the physical uplink control channel resources, further comprises:
parsing, by the base station, an information bit of the scheduling request information, wherein the information bit is used for indicating that the scheduling request information is used for requesting uplink resources from a corresponding base station; and
determining, by the base station, according to the information bit, whether or not the scheduling request information is intended to be transmitted to the base station by the user equipment.

19. The method of claim 18, wherein if a parsed value of the information bit is 0, the scheduling request information is used for requesting uplink resources from a first base station; and if a parsed value of the information bit of the scheduling request information is 1, the scheduling request information is used for requesting uplink resources from a second base station; or
wherein if a parsed value of the information bit is 10, the scheduling request information is used for requesting uplink resources from a first base station; if a parsed value of the information bit is 01, the scheduling request information is used for requesting uplink resources from a second base station; and if a parsed value of the information bit is 11, the scheduling request information is used for simultaneously requesting uplink resources from the first base station and the second base station.

20. The method of any one of claims 13 to 19, wherein if the base station is a macro base station, before the determining, by the base station, based on a scheduling request configuration, physical uplink control channel resources for transmitting scheduling request information by a user equipment, the method further comprises:
sending, by the base station, the scheduling request configuration to the user equipment or to a pico base station through high-level signaling.

21. The method of any one of claims 13 to 19, wherein if the base station is a pico base station, before the determining, by the base station, based on a scheduling request configuration, physical uplink control channel resources for transmitting scheduling request information by a user equipment, the method further comprises:
receiving, by the base station, the scheduling request configuration sent by a macro base station.

22. An apparatus for transmitting a scheduling request, comprising:
a receiving unit, configured to receive a scheduling request configuration;
a first determining unit, configured to determine, based on the scheduling request configuration received by the receiving unit, physical uplink control channel resources for transmitting scheduling request information, wherein the scheduling request information is used for a user equipment to request uplink resources from a base station; and
a transmitting unit, configured to transmit the scheduling request information on the determined physical uplink control channel resources.

23. The apparatus of claim 22, wherein the first determining unit is specifically configured to determine, when the scheduling request configuration comprises a plurality of parameters indicating physical uplink control channels, a physical uplink control channel for transmitting the scheduling request information according to the parameter, wherein the plurality of parameters indicating the physical uplink control channels respectively indicate scheduling request information corresponding to different base stations; and
wherein the transmitting unit is specifically configured to transmit the scheduling request information for requesting uplink resources from a corresponding base station on the determined physical uplink control channel.

24. The apparatus of claim 23, wherein the transmitting unit is further configured to,
when the plurality of parameters indicating the physical uplink control channels comprise a parameter of a first physical uplink control channel and a parameter of a second physical uplink control channel, transmit scheduling request information for requesting uplink resources from a first base station on a physical uplink control channel indicated by the parameter of the first physical uplink control channel, and transmit scheduling request information for requesting uplink resources from a second base station on a physical uplink control channel indicated by the parameter of the second physical uplink control channel, wherein the parameter of the first physical uplink control channel is used for indicating the physical uplink control channel for transmitting the scheduling request information for requesting uplink resources from the first base station, and the parameter of the second physical uplink control channel is used for indicating the physical uplink control channel for transmitting the scheduling request information for requesting uplink resources from the second base station.

25. The apparatus of claim 22 or 23, wherein the first determining unit is specifically configured to determine, when the scheduling request configuration comprises a parameter indicating a transmission period and a subframe offset of scheduling request information, subframes for transmitting scheduling request information for requesting uplink resources from different base stations according to the parameter indicating the transmission period and the subframe offset of the scheduling request information; and
wherein the transmitting unit is specifically configured to transmit scheduling request information for requesting uplink resources from a corresponding base station at a determined subframe.

26. The apparatus of claim 25, wherein the transmitting unit is further configured to transmit scheduling request information for requesting uplink resources from a first base station at a subframe at an even position of the determined subframes, and transmit scheduling request information for requesting uplink resources from a second base station at a subframe at an odd position of the determined subframes.

27. The apparatus of claim 22, wherein the first determining unit is specifically configured to determine, when the scheduling request configuration comprises a plurality of scheduling request sub-configurations, a subframe for transmitting scheduling request information for requesting uplink resources from a corresponding base station according to a parameter indicating a transmission period and a subframe offset of the scheduling request information for requesting uplink resources from the corresponding base station, wherein each of the scheduling request sub-configurations comprises a parameter indicating a transmission period and a subframe offset of scheduling request information for requesting uplink resources from a corresponding base station; and
wherein the transmitting unit is specifically configured to transmit the scheduling request information for requesting uplink resources from the corresponding base station at the determined subframe.

28. The apparatus of claim 27, wherein the first determining unit is further configured to determine, when each of the scheduling request sub-configurations further comprises a parameter indicating a physical uplink control channel, a physical uplink control channel for transmitting the scheduling request information according to a parameter indicating the physical uplink control channel; and
the transmitting unit is further configured to transmit the scheduling request information for requesting uplink resources from the corresponding base station at the determined subframe and on the determined physical uplink control channel.

29. The apparatus of any one of claims 22 to 28, wherein the first determining unit is further configured to,
before the transmitting unit transmits the scheduling request information on the determined physical uplink control channel resources, determine scheduling request information to be transmitted, and set an information bit for the scheduling request information to be transmitted, wherein the information bit is used for indicating that the scheduling request information is used for requesting uplink resources from a corresponding base station.

30. The apparatus of claim 29, wherein if the scheduling request information to be transmitted is used for requesting uplink resources from a first base station, the information bit corresponding to the scheduling request information to be transmitted is set to 0; and if the scheduling request information to be transmitted is used for requesting uplink resources from a second base station, the information bit corresponding to the scheduling request information to be transmitted is set to 1; or
wherein if the scheduling request information to be transmitted is used for requesting uplink resources from a first base station, the information bit corresponding to the scheduling request information to be transmitted is set to 10; if the scheduling to-be-transmitted request information is used for requesting uplink resources from a second base station, the information bit corresponding to the scheduling request information to be transmitted is set to 01; and if the scheduling request information to be transmitted is used for simultaneously requesting uplink resources from the first base station and the second base station, the information bit corresponding to the scheduling request information to be transmitted is set to 11.

31. The apparatus of claim 29 or 30, wherein the first determining unit is further configured to determine, if the scheduling request information to be transmitted comprises a plurality of pieces of scheduling request information for requesting uplink resources from different base stations, that the scheduling request information is a piece of scheduling request information with a highest priority according to a preset priority, wherein the preset priority is a priority of a carrier, a priority signaled semi-statically by a higher layer, or a priority of a base station.

32. The apparatus of any one of claims 22 to 31, wherein the physical uplink control channel resources are physical uplink control channel resources on an uplink carrier corresponding to a macro base station.

33. An apparatus for transmitting a scheduling request, comprising:
a second determining unit, configured to determine, based on a scheduling request configuration, physical uplink control channel resources for transmitting scheduling request information by a user equipment; and
a detecting unit, configured to detect the scheduling request information on the physical uplink control channel resources.

34. The apparatus of claim 33, wherein if the scheduling request configuration comprises a plurality of parameters indicating physical uplink control channels, each of which is used for indicating a physical uplink control channel used by the user equipment for transmitting scheduling request information for requesting uplink resources from a corresponding base station,
the second determining unit is specifically configured to determine, based on the parameters indicating physical uplink control channels, the physical uplink control channels used by the user equipment for transmitting scheduling request information for requesting uplink resources from different base stations; and
the detecting unit is specifically configured to detect the scheduling request information on the physical uplink control channels.

35. The apparatus of claim 33 or 34, wherein if the scheduling request configuration comprises a parameter indicating a transmission period and a subframe offset of scheduling request information,
the second determining unit is further configured to determine, based on the parameter indicating the transmission period and the subframe offset of scheduling request information, subframes for transmitting scheduling request information by the user equipment; and
the detecting unit is further configured to detect the scheduling request information on the subframes.

36. The apparatus of claim 35, wherein the second determining unit is further configured to receive the scheduling request information at a subframe at an odd or an even position of the determined subframes.

37. The apparatus of claim 33, wherein if the scheduling request configuration comprises a plurality of scheduling request sub-configurations, each of which is used for configuring scheduling request information for the user equipment to request uplink resources from a corresponding base station,
the second determining unit is specifically configured to determine, based on the plurality of scheduling request sub-configurations, physical uplink control channel resources used by the user equipment for transmitting scheduling request information for requesting uplink resources from the apparatus; and
the detecting unit is specifically configured to detect the scheduling request information on the physical uplink control channel resources indicated by the scheduling request sub-configurations.

38. The apparatus according to any one of claims 33 to 37, wherein the detecting unit is further configured to:
parse an information bit of the scheduling request information, wherein the information bit is used for indicating that the scheduling request information is used for requesting uplink resources from a corresponding base station; and
determine, according to the information bit, whether or not the scheduling request information is intended to be transmitted to the apparatus by the user equipment.

39. The apparatus of claim 38, wherein if a parsed value of the information bit is 0, the scheduling request information is used for requesting uplink resources from a first base station; and if a parsed value of the information bit of the scheduling request information is 1, the scheduling request information is used for requesting uplink resources from a second base station; or
wherein if a parsed value of the information bit is 10, the scheduling request information is used for requesting uplink resources from a first base station; if a parsed value of the information bit is 01, the scheduling request information is used for requesting uplink resources from a second base station; and if a parsed value of the information bit is 11, the scheduling request information is used for simultaneously requesting uplink resources from the first base station and the second base station.

40. The apparatus of any one of claims 33 to 39, further comprising:
a transceiving unit, configured to,
if the apparatus is configured in a macro base station, send, before the second determining unit determines the physical uplink control channel resources for transmitting scheduling request information by the user equipment based on the scheduling request configuration, the scheduling request configuration to the user equipment or to a pico base station through high-level signaling; or
if the apparatus is configured in a pico base station, receive, before the second determining unit determines the physical uplink control channel resources for transmitting scheduling request information by the user equipment based on the scheduling request configuration, the scheduling request configuration sent by a macro base station.

41. A user equipment, comprising:
a receiver, configured to receive a scheduling request configuration;
a processor, configured to determine, based on the scheduling request configuration received by the receiver, physical uplink control channel resources for transmitting scheduling request information, wherein the scheduling request information is used for a user equipment to request uplink resources from a base station; and
a transmitter, configured to transmit the scheduling request information on the determined physical uplink control channel resources.

42. The user equipment of claim 41, wherein the processor is further configured to determine, when the scheduling request configuration comprises a plurality of parameters indicating physical uplink control channels, a physical uplink control channel for transmitting the scheduling request information according to the parameter, wherein the plurality of parameters indicating the physical uplink control channels respectively indicate scheduling request information corresponding to different base stations; and
wherein the transmitter is further configured to transmit scheduling request information for requesting uplink resources from a corresponding base station on the determined physical uplink control channel.

43. The user equipment of claim 41 or 42, wherein the processor is further configured to determine, when the scheduling request configuration comprises a parameter indicating a transmission period and a subframe offset of scheduling request information, subframes for transmitting scheduling request information for requesting uplink resources from different base stations according to the parameter indicating the transmission period and the subframe offset of the scheduling request information; and
wherein the transmitter is further configured to transmit the scheduling request information for requesting uplink resources from a corresponding base station at a determined subframe.

44. The user equipment of claim 41, wherein the processor is further configured to determine, when the scheduling request configuration comprises a plurality of scheduling request sub-configurations, a subframe for transmitting scheduling request information for requesting uplink resources from a corresponding base station according to a parameter indicating a transmission period and a subframe offset of the scheduling request information for requesting uplink resources from the corresponding base station, wherein each of the scheduling request sub-configurations comprises a parameter indicating a transmission period and a subframe offset of scheduling request information for requesting uplink resources from a corresponding base station; and
wherein the transmitter is further configured to transmit the scheduling request information for requesting uplink resources from the corresponding base station at the determined subframe.

45. The user equipment of claim 44, wherein the processor is further configured to determine, when each of the scheduling request sub-configurations further comprises a parameter indicating a physical uplink control channel, a physical uplink control channel for transmitting the scheduling request information according to a parameter indicating the physical uplink control channel; and
the transmitter is further configured to transmit the scheduling request information for requesting uplink resources from the corresponding base station at the determined subframe and on the determined physical uplink control channel.

46. The user equipment according to any one of claims 41 to 45, wherein the processor is further configured to,
before the transmitter transmits the scheduling request information on the determined physical uplink control channel resources, determine scheduling request information to be transmitted, and set an information bit for the scheduling request information to be transmitted, wherein the information bit is used for indicating that the scheduling request information is used for requesting uplink resources from a corresponding base station.

47. A base station, comprising:
a transmitter, configured to transmit a scheduling request configuration to a user equipment;
a processor, configured to determine, based on the scheduling request configuration, physical uplink control channel resources for transmitting scheduling request information by the user equipment; and
a receiver, configured to receive the scheduling request information transmitted by the user equipment on the physical uplink control channel resources.

48. The base station of claim 47, wherein if the scheduling request configuration comprises a plurality of parameters indicating physical uplink control channels, each of which is used for indicating a physical uplink control channel used by the user equipment for transmitting scheduling request information for requesting uplink resources from a corresponding base station,
the processor is further configured to determine, based on the parameters indicating physical uplink control channels, the physical uplink control channels used by the user equipment for transmitting scheduling request information for requesting uplink resources from different base stations; and
the receiver is further configured to detect the scheduling request information on the physical uplink control channels.

49. The base station of claim 47 or 48, wherein if the scheduling request configuration comprises a parameter indicating a transmission period and a subframe offset of scheduling request information,
the processor is further configured to determine, based on the parameter indicating the transmission period and the subframe offset of scheduling request information, subframes for transmitting scheduling request information by the user equipment; and
the receiver is further configured to detect the scheduling request information on the subframes.

50. The base station of claim 49, wherein the processor is further configured to receive the scheduling request information at a subframe at an odd or an even position of the determined subframes.

51. The base station of claim 47, wherein if the scheduling request configuration comprises a plurality of scheduling request sub-configurations, each of which is used for configuring scheduling request information for the user equipment to request uplink resources from a corresponding base station,
the processor is further configured to determine, based on the plurality of scheduling request sub-configurations, physical uplink control channel resources used by the user equipment for transmitting scheduling request information for requesting uplink resources from the base station; and
the receiver is further configured to detect the scheduling request information on the physical uplink control channel resources indicated by the scheduling request sub-configurations.

52. The base station according to any one of claims 47 to 51, wherein the detecting unit is further configured to:
parse an information bit of the scheduling request information, wherein the information bit is used for indicating that the scheduling request information is used for requesting uplink resources from a corresponding base station; and
determine, according to the information bit, whether or not the scheduling request information is intended to be transmitted to the base station by the user equipment.
